(19)

Europäisches
Patentamt
European
Patent Office
Office européen
des brevets

(11) **EP 2 720 399 A1**

(12) **EUROPEAN PATENT APPLICATION**

(43) Date of publication:
16.04.2014 Bulletin 2014/16

(21) Application number: 14000108.2

(22) Date of filing: 25.08.2009

(51) Int Cl.:
$H04L\ 5/00$ (2006.01) $H04L\ 27/26$ (2006.01)
$H04L\ 1/04$ (2006.01) $H04L\ 1/08$ (2006.01)
$H04L\ 1/00$ (2006.01)

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: 25.08.2008 US 91621 P
14.10.2008 US 196068 P

(62) Document number(s) of the earlier application(s) in
accordance with Art. 76 EPC:
**09791896.5 / 2 327 182**

(71) Applicant: **AWARE, INC.**
**Bedford, MA 01730 (US)**

(72) Inventor: **Kim, Joon, Bae**
**Lexington, MA 02420 (US)**

(74) Representative: **Von Rohr**
**Patentanwälte Partnerschaft**
**Rüttenscheider Straße 62**
**45130 Essen (DE)**

Remarks:
This application was filed on 13-01-2014 as a
divisional application to the application mentioned
under INID code 62.

(54) **System and method of sub-carrier indexing for devices with different decoding capabilities**

(57) Techniques for performing a common sub-carrier indexing for all device profiles so that a high-profile device can decode a greater portion of sub-carriers relative to those decodable by a low-profile device, and a low-profile device can decode a smaller portion of sub-carriers relative to those decodable by a high-profile device. The predetermined indexing technique specifies that a frequency F(ieven) is assigned to subcarriers with even indices in accordance with a first formula and that a frequency F(iodd) is assigned to subcarriers with odd indices in accordance with a second formula.

Fig. 15

EP 2 720 399 A1

**Description**

RELATED APPLICATION DATA

This application claims the benefit of and priority under 35 U-S.C. § 119(e) to U.S. Patent Application Nos. 61/091,621, filed August 25, 2008, entitled "Methods to Identify Packet Traffic Transmitted by Various Devices Operated in Multiple Overlapped Frequency Bands in Packet-Based OFDM Systems," and 61/196,068, filed October 14, 2008, entitled "Methods to Identify Packet Traffic Transmitted by Various Devices Operated in Multiple Overlapped Frequency Bands and Packet-Based OFDM Systems," both of which are incorporated herein by reference in their entirety.

BACKGROUND

FIELD OF THE INVENTION

Exemplary aspects of the invention relate to communications systems. More specifically, exemplary aspects of the invention relate to communications systems where information is exchanged using packet-based transmissions based on Orthogonal Frequency Division Multiplexing (OFDM). More specifically, exemplary aspects of the invention relate to identifying packet traffic in order to support interoperability among devices operated in multiple frequency bands where packet-based transmission based on orthogonal frequency domain multiplexing is used.

Considering multi-user communication environments where two or more users communicate with one another over a shared channel, e.g., a single frequency band, using packet-based transmission based on OFDM, a packet is usually formed by a preamble, a header, and a payload, and transmitted using time-sharing or contention-based media access methods. Examples of such systems includes IEEE 802.11 (Wireless LAN) and IEEE 802.16 (WiMAX).

OFDM, also referred to as Discrete MultiTone (DMT) or multicarrier communications, divides the transmission frequency band into multiple subcarriers, also referred to as tones or subchannels, with each subcarrier individually modulating a bit or a collection of bits.

SUMMARY

As used herein, the terms transmitter, transmitting transceiver and transmitting modem are used interchangeably, similarly, the terms receiver, receiving transceiver and receiving modem are used interchangeably as well as the terms modem and transceiver being used interchangeably.

Additionally, as used herein, the following terms are defined:

Domain: A network comprising all nodes which can communicate and interfere with each other directly at the physical layer.

Domain Master (DM): A node of a domain managing (coordinating) all other nodes of the same domain (e.g., assigning bandwidth, resources and manage priorities).

Profile: A band plan which specifies OFDM modulation parameters such as the range of frequency, sub-carrier spacing, cyclic prefix, etc. There must be one or more overlapped regions between two different profiles.

High-profile device: A device operated using a profile which has a higher bandwidth relative to low-profile.

Low-profile device: A device operated using a profile which has a lower bandwidth relative to high-profile.

Fsc: Sub-carrier spacing.

N: Maximum number of sub-carriers in a profile of the bandwidth B (B = N $\times$ Fsc).

Fus: Frequency up-shift used in the definition of IDFT for baseband transmission.

Fuc: Frequency up-conversion used in the definition of IDFT for passband or Radio-Frequency (RF) transmission.

Fc: Center frequency used in the definition of IDFT for passband or RF transmission.

$$Fc = Fuc + Fus.$$

Exemplary aspects of the invention are directed toward identification of packet traffic.

Additional aspects of the invention are directed toward identification of packet traffic transmitted by various devices operated in a multiple overlapped frequency bands in packet-based OFDM environments.

Additional aspects of the invention are directed toward a domain master managing traffic amongst a plurality of devices in a domain, with all devices in a domain capable of identifying all traffic passing therethrough.

Even further aspects of the invention relate to accommodating multiple profiles within a single domain.

Additional aspects of the invention are also directed toward injecting information regarding profile (band plan) into a preamble so that a receiver can identify what profile the transmitter is operating on as part of a preamble detection process.

Even further aspects of the invention relate to bypassing a header decoding process.

Additional aspects of the invention relate to having common sub-carrier indexing for all profiles so that a high-profile device can decode a portion of sub-carriers of a low-profile device, and a low-profile device can decode a portion of sub-carriers of a high-profile device.

Additional aspects relate to enhancing the decodability of a header via sub-carrier redistribution.

Additional aspects of the invention relate to distribution of header information between preamble and non-preamble tones.

Aspects of the invention also relate to making a number of sub-carriers on which a single set of header information bits are mapped, and the ratio of the number of non-preamble tones over the number of preamble tones, be co-prime or even-odd pair.

Even further aspects of the invention relate to circular shifting of sub-carriers within each header block, for example, by changing tone mapping as a copy of the header block is repeated over the entire bandwidth.

These and other features and advantages of this invention are described in, or are apparent from, the following detail description of the exemplary embodiments.

## BRIEF DESCRIPTION OF THE DRAWINGS

The exemplary embodiments of the invention will be described in detail, with reference to the following figures, wherein:

Fig. 1         illustrates an exemplary domain according to this invention;

Fig. 2         illustrates an exemplary embodiment of a domain where multiple profiles are operating according to this invention;

Fig. 3         illustrates an exemplary set of passband and baseband profiles according to this invention;

Fig. 4         illustrates an exemplary two-section preamble according to this invention;

Fig. 5         illustrates an exemplary portion of a packet according to this invention;

Fig. 6         illustrates an exemplary preamble generation system according to this invention;

Fig. 7         illustrates a flowchart of an exemplary method for preamble assembly according to this invention;

Fig. 8         illustrates a flowchart of an exemplary method for profile detection according to this invention;

Fig. 9         illustrates a flowchart of an exemplary method for profile selection for packet transmission according to this invention;

Fig. 10         is a flowchart illustrating an exemplary method for packet reception according to this invention;

Fig. 11         illustrates examples of sub-carrier indexing for different baseband and passband profiles based on an IDFT definition;

Fig. 12         illustrates examples of alternate sub-carrier indexing for different baseband and passband profiles according to this invention;

Fig. 13         illustrates another example of sub-carrier indexing for different passband profiles according to this invention;

Fig. 14    illustrates an exemplary transceiver according to this invention;

Fig. 15    is a flowchart illustrating an exemplary header identification method according to this invention;

Fig. 16    is a flowchart illustrating an exemplary header identification and demodulation method according to this invention;

Fig. 17    is a flowchart illustrating another exemplary header identification method according to this invention;

Fig. 18    is a flowchart illustrating another exemplary header identification and demodulation method according to this invention;

Fig. 19    illustrates examples of header repetition schemes used in baseband and passband profiles;

Fig. 20    illustrates an exemplary header repetition scheme;

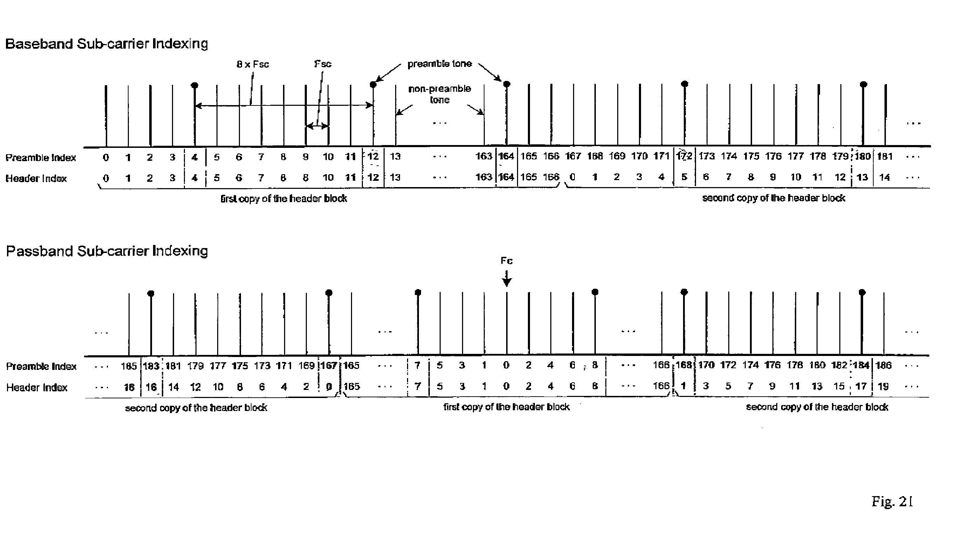

Fig. 21    illustrates an exemplary header repetition scheme with odd header information block size;

Fig. 22    illustrates an exemplary header repetition scheme utilizing tone shifting;

Fig. 23    illustrates another exemplary communication system according to this invention;

Fig. 24    is a flowchart illustrating an exemplary method for enhanced header techniques according to this invention;

Fig. 25    is a flowchart illustrating another exemplary method for enhanced header techniques according to this invention;

Fig. 26 and 27    are flowcharts illustrating exemplary methods for header encoding and header decoding, respectively, according to another exemplary embodiment of this invention; and

Fig. 28    illustrates another exemplary method of passband OFDM communications according to this invention.

DETAIL DESCRIPTION

The exemplary embodiments of this invention will be described in relation to OFDM communications systems, as well as protocols, techniques and methods to identify packets. However, it should be appreciated, that in general, the systems and methods of this invention will work equally well for other types of communications environments and/or protocols.

The exemplary systems and methods of this invention will also be described in relation to multicarrier wired or wireless modems, such as powerline modems, coaxial cable modems, telephone line modems, such as xDSL modems and vDSL modems, wireless modems, such as 802.11 and 802.16 modems, and associated communications hardware, software and communications channels. However to avoid unnecessarily obscuring the present invention, the following description omits well-known structures and devices that may be shown in block diagram form or are otherwise summarized or known.

For purposes of explanation, numerous details are set forth in order to provide a thorough understanding of the present invention. It should be appreciated however that the present invention may be practiced in a variety of ways beyond the specific details set forth herein.

Furthermore, while the exemplary embodiments illustrated herein show the various components of the system collocated, it is to be appreciated that the various components of the system can be located at distant portions of a distributed network, such as a communications network and/or the Internet, or within a dedicated secure, unsecured, and/or encrypted system. Thus, it should be appreciated that the components of the system can be combined into one or more devices, such as a modem, line card, a station, a domain master, a node or collocated on a particular node of a distributed network, such as a telecommunications network. As will be appreciated from the following description, and for reasons of computations efficiency, the components of the systems can be arranged at any location within a distributed network without affecting the operation thereof. For example, the various components can be located in a domain master, a node, a domain management device, or some combination thereof. Similarly, one or more functional portions of this system could be distributed between a modem and an associated computing device.

Furthermore, it should be appreciated that the various links, including the communications channels connecting the elements (not shown) can be wired or wireless links or any combination thereof, or any other known or later developed element(s) capable of supplying and/or communicating data to and from the connected elements. The term module as used herein can refer to any known or later developed hardware, software, firmware, or combination thereof, that is capable of performing the functionality associated with that element. The terms determine, calculate, and compute, and variations thereof, as used herein are used interchangeably and include any type of methodology, process, technique, mathematical operation or protocol. The terms transmitting modem and transmitting transceiver as well as receiving modem and receiving transceiver are also used interchangeably herein.

Moreover, while some of the exemplary embodiments described are directed toward a transmitter portion of a transceiver performing certain functions, this disclosure is intended to include corresponding receiver-side functionality in both the same transceiver and/or another transceiver and vice versa.

Certain exemplary embodiments of this invention relate to multi-carrier communications links, such as Discrete Multi-Tone (DMT). Also, the terms transceiver and modem have the same meaning and are used interchangeably.

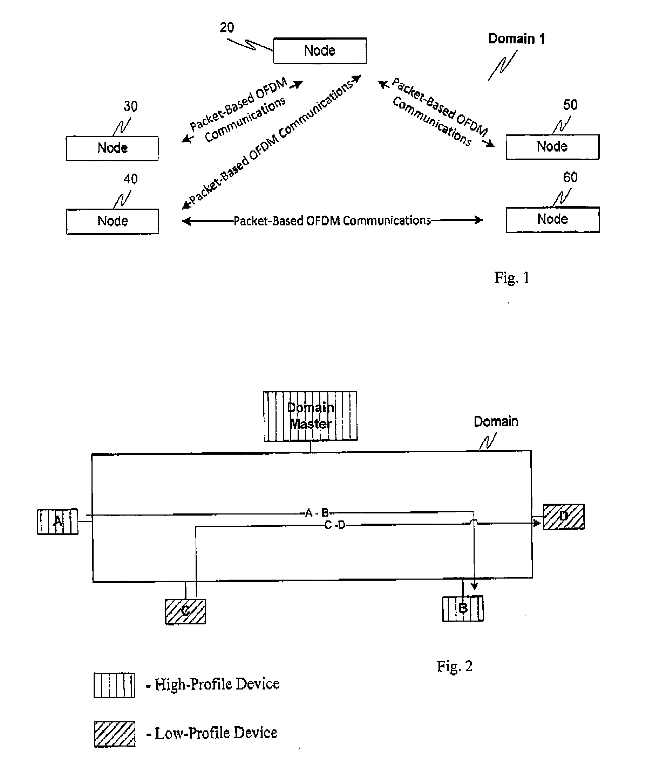

Fig. 1 illustrates an exemplary communications environment in domain 1. The communications environment includes a plurality of nodes 20-60 that exchange packet-based OFDM communications. In Fig. 2, an example of multiple devices with two profiles operating in a single domain is shown. As an example, there can be two high-profile devices (A and B), two low-profile devices (C and D), and one domain master, which is also a high-profile device in this exemplary embodiment. One unidirectional communication link can be established between transmitter A and receiver B using a high-profile, and another unidirectional communication link can be made between transmitter C and receiver D using a low-profile. The domain master can manage traffic among these devices using both profiles. Since all devices can operate at the same time using a shared channel, they should be also able to identify all traffic passing through the domain. That is, B and D should be able to identify packets transmitted by A and C.

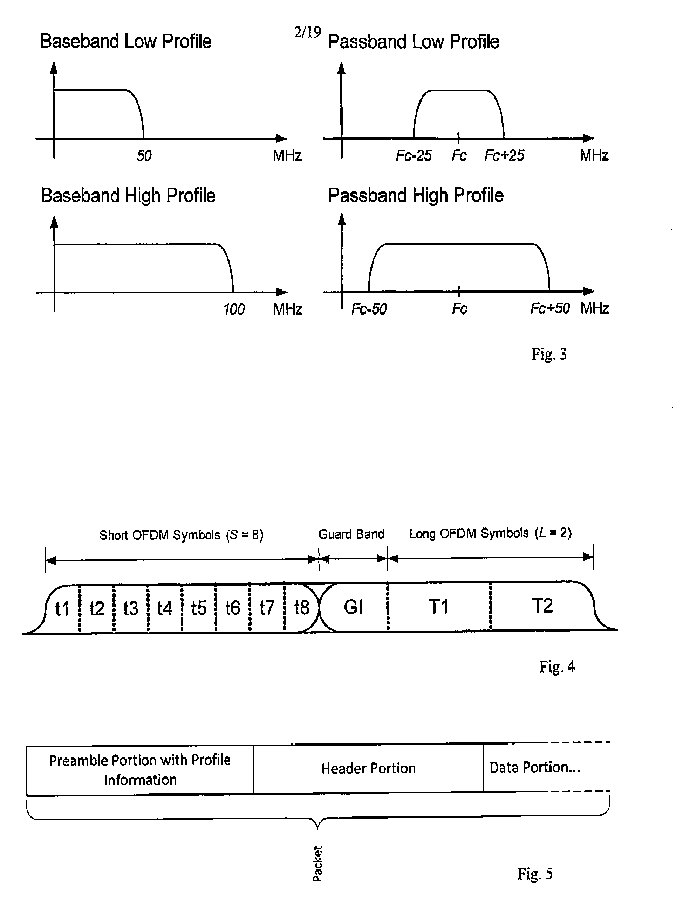

Fig. 3 illustrates examples of two baseband and a passband profiles where a low profile has a bandwidth of 50 MHz and a high profile has a bandwidth of 100 MHz. In order to accommodate multiple profiles within a single domain, all the devices should be able to identify the source and destination of all traffic. In order to achieve this:

1. The devices operating on different profiles should be able to detect each other's preamble.

For example, if A communicates with B, and C communicates with D in a single domain as shown in Fig. 2, then B should be able to detect preambles from A and C. The same holds true for D.

2. The devices operating on different profiles may need to decode each other's header.

For example, if A communicates with B, and C communicates with D in a single domain as shown in Fig. 2, then B may need to decode headers from A and C. The same is true for D. This is to identify the source and destination of the packet. However, this step can optionally be omitted if the device can extract information about the profile from the received preamble as discussed herein.

In accordance with an exemplary embodiment of the invention is a method to inject information regarding the profile (band plan) into a preamble so that a receiver can identify what profile the transmitter is utilizing as part of the preamble detection process. This method at least enables the receiver to bypass the header decoding process.

Fig. 4 shows one example of the preamble structure used in various standards, such as IEEE 802.11. The preamble comprises S short OFDM symbols denoted by t followed by L long OFDM symbols denoted by T. In Figure 4, S=8 and L=2 as one possible example of this structure. There is no guard interval (GI) within short (or long) symbols, but there is one between short and long symbols. The short OFDM symbols use the smaller number of sub-carriers ($N1$) with the larger tone spacing ($k1$), which results in a short time duration, whereas the long OFDM symbols use the larger number of sub-carriers ($N2$) with the smaller tone spacing ($k2$), which results in a long time duration. However, both short and long OFDM symbols cover the same frequency band ($B = N1 \times k1 = N2 \times k2$). One should note that the same signal should be used for S short OFDM symbols (e.g., the signal becomes periodic), and the same is true for $L$ long OFDM symbols, but short and long OFDM symbols do not necessarily have the same signal.

In accordance with one exemplary embodiment, a technique makes use of the signal of the long OFDM symbols to carry information regarding profiles. For example, if QPSK is used for all preamble symbols, then different phases can be used to represent different types of profiles. For example, the preamble shown in Fig. 4 can have distinct two-section preambles for 4 profiles:

Profile #1: t1(+,+), t2(+,+),..., t8(+,+), T1(+,+), T2(+,+)

Profile #2: t1(+,+), t2(+,+),..., t8(+,+), T1(−,+), T2(−,+)

Profile #3: t1(+,+), t2(+,+),..., t8(+,+), T1(−,−), T2(−,−)

Profile #4: t1(+,+), t2(+,+),..., t8(+,+), T1(+,−), T2(+,−)

"t1 (+,+)" denotes that all tones in t1 short symbol are loaded with (+,+).

However, the construction of the preamble as shown above and in Fig. 4 is not to be considered limiting. More broadly, and in relation to Fig. 5, a portion of a packet is shown that comprises a preamble portion with profile information as well as a header portion and a data portion - in general, the preamble can carry information about the profile. For example, the preamble portion of a packet can contain information that is transmitted by a transmitter and receiver by a receiver, wherein this information indicates which profile is being used or more generally any information about the profile being used for the transmission or reception of the packet. The method for indicating information about the packet can be, for example, based one or one or more of the following:

the phase of subcarriers in the preamble,
the amplitude of subcarriers in the preamble,
the subcarrier spacing of subcarriers in the preamble,
the number of subcarriers in the preamble, and
the indexes of transmitted subcarriers in the preamble.

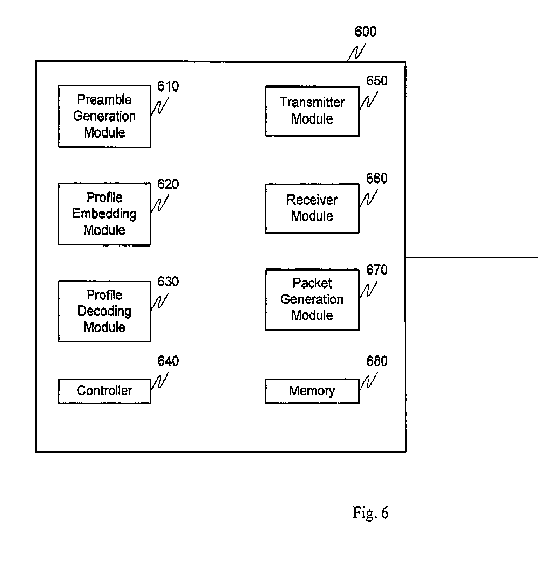

For example, Fig. 6 illustrates an exemplary transceiver 600 according to this invention. The transceiver 600 includes a preamble generation module 610, a profile embedding module 620, a profile decoding module 630, controller 640, transmitter module 650, receiver module 660, packet generation module 670, and memory 680, as well as additional well known componentry (not shown).

In operation, for packet transmission, the packet generation module 670, cooperating with the preamble generation module 610 and profile embedding module 620, include information in the preamble representative of the profile that will be used by the transmitter module 650 for the sending of the packet. For example, as discussed above, different phases can be used to represent different types of profiles, different amplitudes of subcarriers can be used to represent different types of profiles, different subcarrier spacing of subcarriers can be used to represent different profiles, the selection of a number of subcarriers can be used to represent different types of profiles and the indexes of transmitted subcarriers can be used to represent different profiles, all being present in the preamble.

At the receiver, upon receipt of a packet that includes profile information in the preamble, the profile decoding module 630, optionally and in cooperation with controller 640 and memory 680, can decode any one or more of the above portions of the information to determine the profile used for transmission.

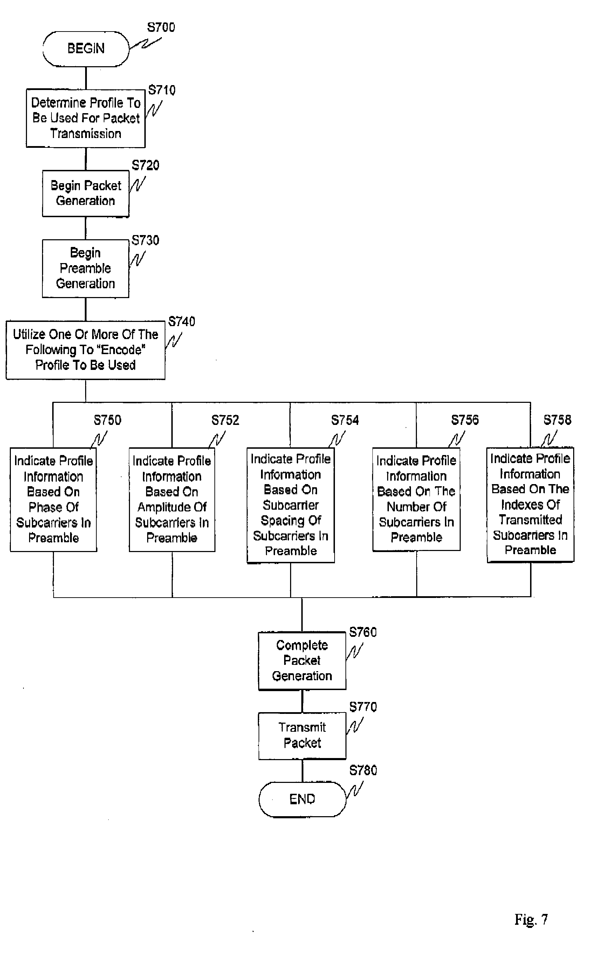

Fig. 7 illustrates an exemplary method for embedding profile information in a packet preamble according to an exemplary embodiment of this invention. In particular, control begins in step S700 and continues to step S710. In step S710, the profile to be used for packet transmission is determined. Next, in step S720, packet generation commences. Then, in step S730, preamble generation commences. Control then continues to step S740.

In step S740, one or more of the following techniques are used to encode or otherwise indicate which profile will be used for transmission of the packet. For example, in step S750, the profile information can be indicated based on the phase of the subcarriers in the preamble. In step S752, the profile information is indicated based on the amplitude of subcarriers in the preamble. In step S754, the profile information is indicated based on subcarrier spacing of subcarriers in the preamble. In step S756, the profile information is indicated based on the number of subcarriers in the preamble. In step S758, the profile information is indicated based on the indexes of transmitted subcarriers in the preamble.

For example, information regarding each of these techniques can be stored in a table and, for example, memory 680. That way, both a transmitter and receiver will be able to correlate the technique used and the information in the preamble to a specific profile.

In step S760, packet generation is completed, with transmission of the packet occurring in step S770 and the control sequence ending in step S780.

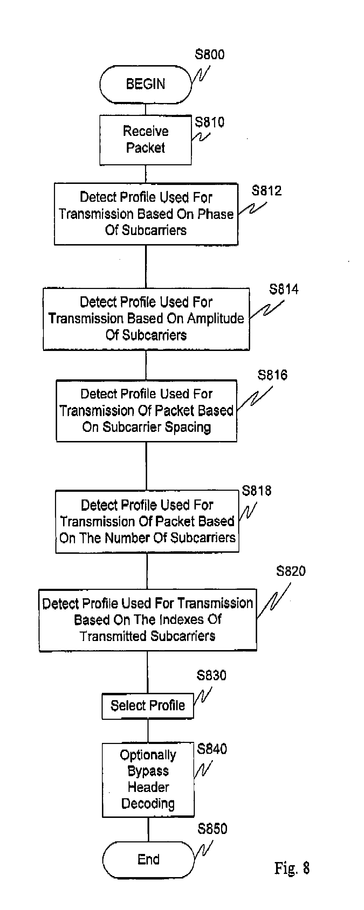

Fig. 8 outlines an exemplary method for profile detection according to an exemplary embodiment of this invention. In particular, control begins in step S800 and continues to step S810. In step S810, a packet is received by a receiver.

Steps S812 - S819 illustrate one or more detection steps that can be performed.

In step S812, the profile used for transmission of the packet can be detected based on the phase of the subcarriers in the preamble. In step S814, the profile used for transmission of the packet can be detected based on the amplitude of subcarriers in the preamble. In step S816, the profile used for transmission of the packet can be detected based on subcarrier spacing of subcarriers in the preamble. In step S818, the profile used for transmission of the packet can be detected based on the number of subcarriers in the preamble. In step S819, the profile used for transmission of the packet can be detected based on the indexes of transmitted subcarriers in the preamble.

Then, in step S830, the profile is selected based on the detection. Control then continues to step S840.

In step S840, header decoding can optionally be bypassed, with control continuing to step S850 where the control sequence ends.

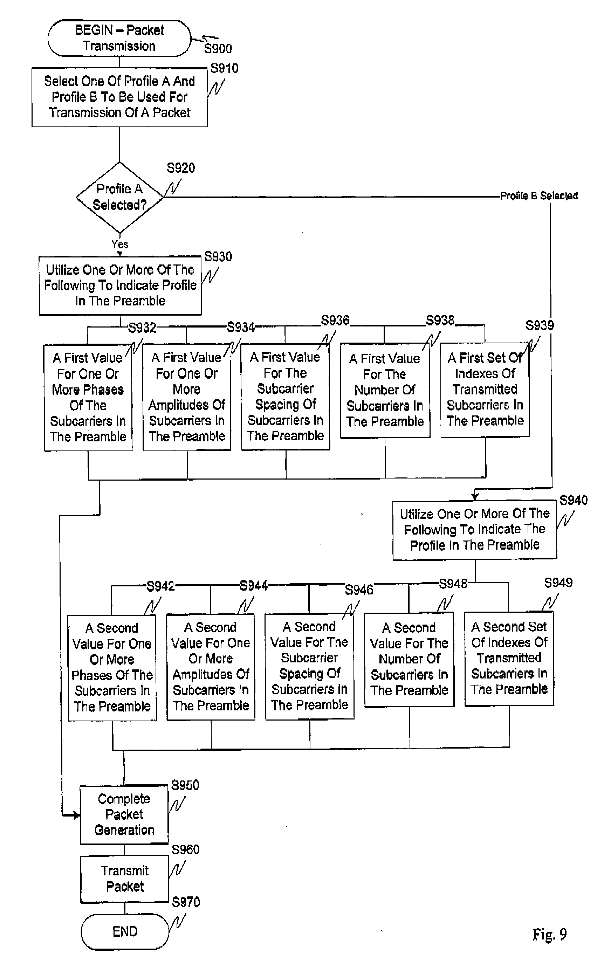

Fig. 9 illustrates an exemplary method for packet transmission according to an exemplary embodiment of this invention. Control begins in step S900 and continues to Step S910. In step S910, one of profile A and profile B to be used for transmission of a packet is selected. Next, in step S920, a determination is made whether Profile A is to be used or Profile B. If Profile A is to be used control continues to step S930. If profile B is to be used control jumps to step S940.

In step S930, and if Profile A is selected one or more of steps S932-S939 are used to indicate the profile in the preamble:

Step S932 - A first value for one or more phases of the subcarriers in the preamble,
Step S934 - A first value for one or more amplitudes of subcarriers in the preamble,
Step S936 - A first value for the subcarrier spacing of subcarriers in the preamble,
Step S938 - A first value for the number of subcarriers in the preamble,
Step S939 - A first set of indexes of transmitted subcarriers in the preamble.

In step S940, and if Profile B is selected, one or more of steps S942-S949 are used to indicate the profile in the preamble:

Step S942 - A second value for one or more phases of the subcarriers in the preamble,
Step S944 - A second value for one or more amplitudes of subcarriers in the preamble,
Step S946 - A second value for the subcarrier spacing of subcarriers in the preamble,
Step S948 - A second value for the number of subcarriers in the preamble,
Step S949 - A second set of indexes of transmitted subcarriers in the preamble.

In step S950 packet generation is completed with the packet being transmitted in step S960. Control then continues to step S970 where the control sequence ends.

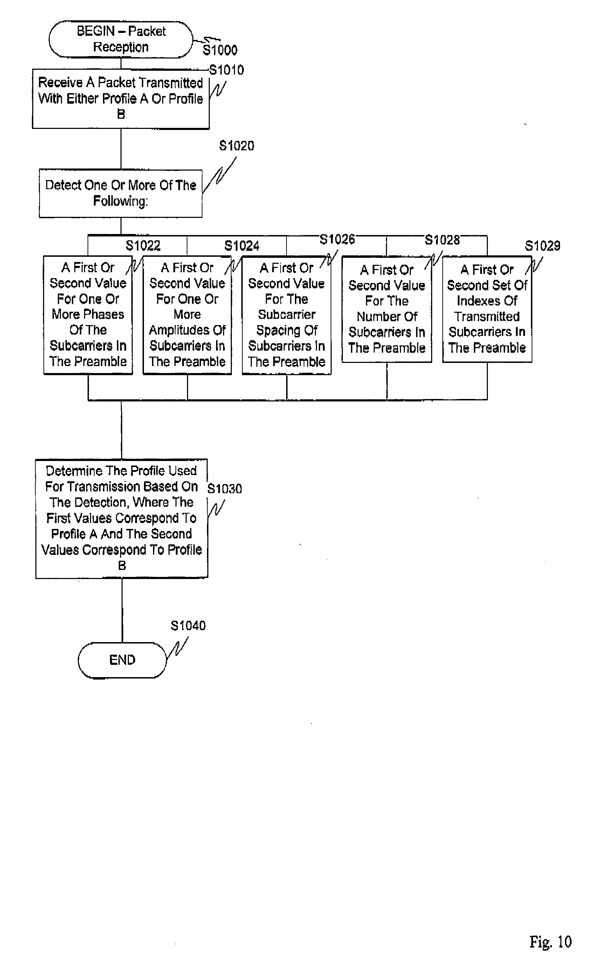

Fig. 10 illustrates an exemplary method for packet reception according to an exemplary embodiment of this invention. Control begins in step S1000 and continues to Step S1010. In step S1010. a packet is received that was transmitted with either Profile A or Profile B. Next, in step S1020, the values in one or more of steps S1022 - S1029 are detected:

Step S1022 - A first or second value for one or more phases of the subcarriers in the preamble,
Step S1024 - A first or second value for one or more amplitudes of subcarriers in the preamble,
Step S1026 - A first or second for the subcarrier spacing of subcarriers in the preamble,
Step S1027 - A first or second for the number of subcarriers in the preamble,
Step S1029 - A first or second set of indexes of transmitted subcarriers in the preamble.

Control then continues to step S1030.

In step S1030, the profile used for transmission is determined based on the detection above, wherein the first values correspond to Profile A and the second values correspond to Profile B. Control then continues to step S1040 where the control sequence ends.

## Header Identification

Another exemplary embodiment of this invention is directed towards methods that allow common sub-carrier indexing for all profiles so that, for example, a high-profile device can decode a portion of sub-carriers of a low-profile device, and a low-profile device can decode a portion of sub-carriers of a high-profile device.

For example, and again with reference to Fig. 2, C should be able to decode a portion of sub-carriers from packets that A transmits, and vice versa. This will be a prerequisite to decode each other's header information to identify the source and destination of data packets. Tone indexing determines the order in which a plurality of bits are mapped to (or loaded on) subcarriers. Therefore, common tone indexing is important for communication between devices using different profiles.

The following is one example of tone indexing based on a conventional IDFT definition.

The sub-carriers shall be indexed from i = 0 to i = N - 1. The sub-carriers with indexes from i = 0 to i = N/2 - 1 shall be centered at frequencies F(i) = Fuc + Fus + i $\times$ Fsc, while those with indexes from i = N/2 to i = N - 1 shall be centered at frequencies F(i) = Fuc + Fus - (N - i) $\times$ Fsc. In baseband transmission, Fuc = 0, while in passband transmission, Fc = Fuc + Fus.

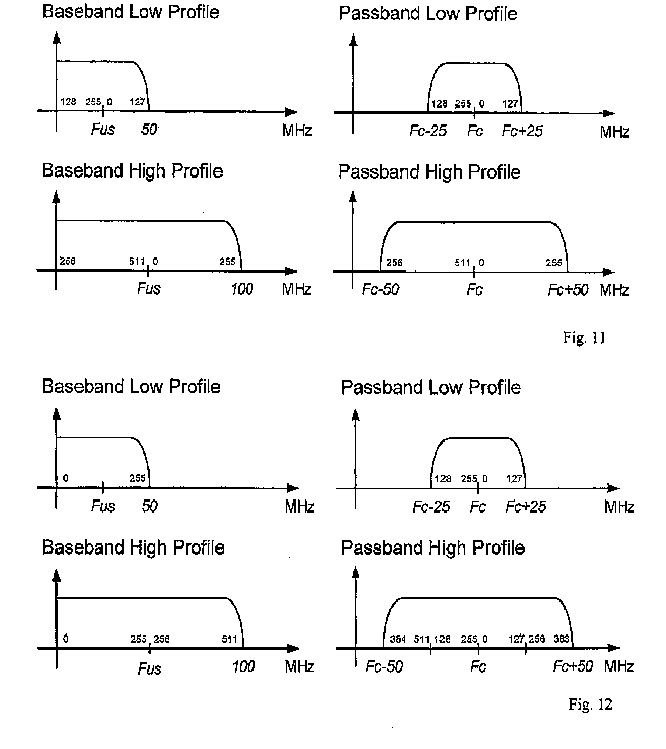

Based on the definition described above, the sub-carrier indexing is shown in Fig. 11. Note that sub-carrier indices in the overlapped frequency range do not match in two different profiles, which makes communication between these two profiles impossible.

Fig. 12 shows one exemplary embodiment of alternate sub-carrier indexing which makes all sub-carrier indices in the overlapped frequency range match in these two profiles according to this invention. There can be many different ways to achieve the same goal. Of note is that sub-carrier indices in the common overlapped frequency region should match for all different profiles.

Let N = K$\times$M where K is the number of frequency segments, which represents the maximum number of profiles, and M is the number of sub-carriers within each segment. In the example in Figure 5, N = 512, K = 2, M = 256.

Baseband:

$$F(i) = i \times Fsc \qquad if \quad i = 0, \ldots, N{-}1$$

Passband:

For each segment k = 0,1, ... , K-1,

$$F(i) = Fc + (i - k{\times}M/2){\times}Fsc \qquad if \quad i = k{\times}M, \ldots, k{\times}M + M/2 - 1$$

$$F(i) = Fc - (k{\times}3M/2 + M - i){\times}Fsc \qquad if \quad i = k{\times}M + M/2, \ldots, (k{+}1){\times}M - 1$$

where

$$Fc = Fuc + Fus \text{ and } j = i - k{\times}M.$$

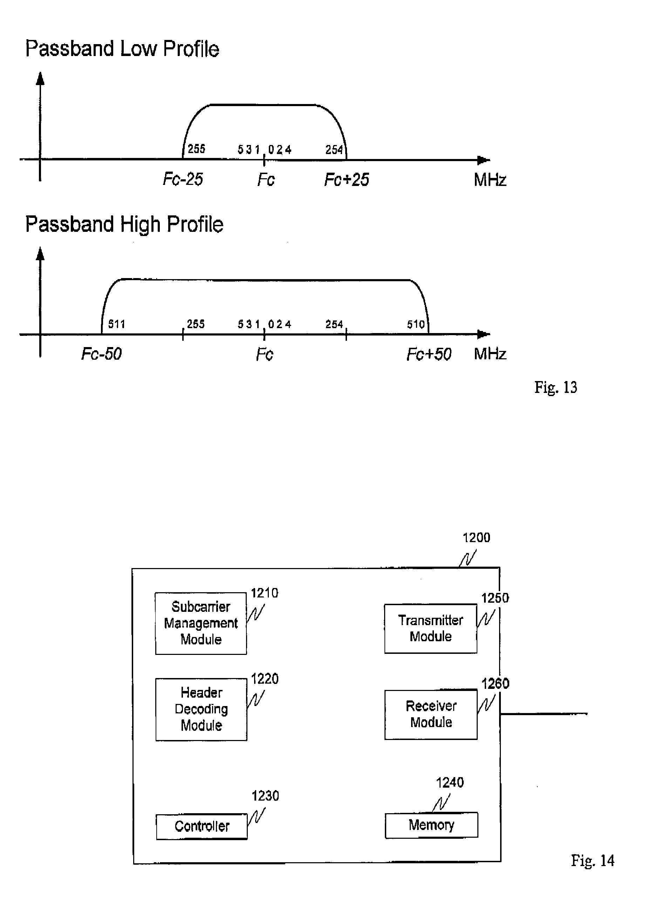

Fig. 13 shows another example of passband sub-carrier indexing which makes all sub-carrier indices in the overlapped frequency range match in multiple profiles. This approach has an exemplary advantage over the previous approach because the index increases monotonically from the center frequency to the outward direction (both left and right) which makes the scheme more scalable.

Passband:

$$F(i) = Fc + (i/2){\times}Fsc \qquad if \quad i = 0, 2, 4, \ldots, N - 2.$$

$$F(i) = Fc - (i{+}1)/2{\times}Fsc \qquad if \quad i = 1, 3, 5, \ldots, N - 1.$$

where

$$Fc = Fuc + Fus.$$

Fig. 14 illustrates an exemplary transceiver 1200 that indexes subcarriers in OFDM communications according to an exemplary embodiment of this invention. Transceiver 1200 includes a subcarrier management module 1210, a header decoding module 1220, a transmitter module 1250, a receiver module 1260, controller 1230 and memory 1240, as well as other well known componentry (not shown).

In operation, the subcarrier management module 1210, cooperating with controller 1230 and memory 1240, a plurality of bits to subcarriers in a specific order, for example, as illustrated in relation to Fig. 13.

At any receiver, and in conjunction with a header decoding module, the header information can be decoded to identify the source and destination of data packets.

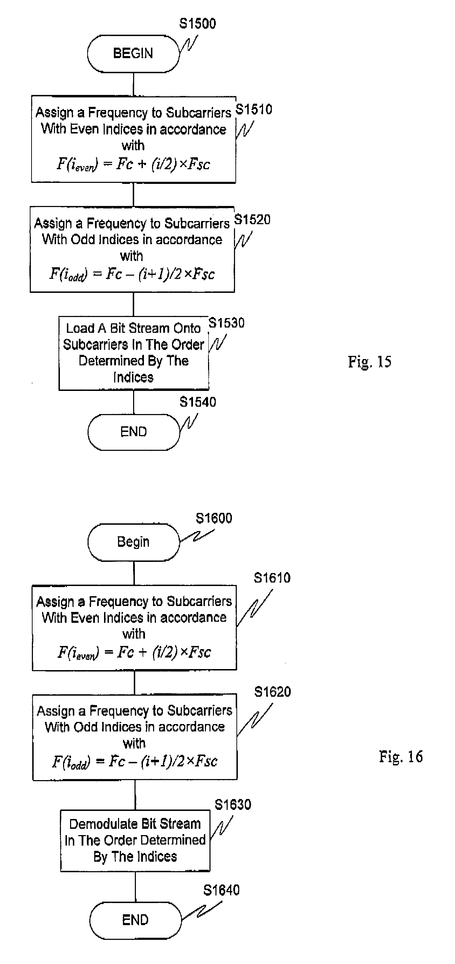

For example, one method of indexing subcarriers for transmission in passband OFDM communications is outlined in Fig. 15.

Specifically, control begins in step S1500 and continues to step S1510. In step S1510, a frequency $F(i_{even})$ is assigned to subcarriers with even indices in accordance with:

$$F(i_{even}) = Fc + (i/2) \times Fsc;$$

Next, in step S1520, a frequency $F(i_{odd})$ is assigned to subcarriers with odd indices in accordance with:

$$F(i_{odd}) = Fc - (i+1)/2 \times Fsc;$$

where Fc = Fuc + Fus, and wherein i is an index, Fuc is a first frequency value and Fus is a second frequency value and Fsc is third frequency value.

Then, in step S1530, a plurality of bits are loaded onto the subcarriers in an order determined by the indices. Control then continues to step S1540 where the control sequence ends.

One exemplary method of indexing subcarriers for reception in passband OFDM communications is illustrated in Fig. 16. Specifically, control begins in step S1600 and continues to Step S1610. In step S1610, a frequency $F(i_{even})$ is assigned to subcarriers with even indices in accordance with;

$$F(i_{even}) = Fc + (i/2) \times Fsc;$$

Next, in step S1620, a frequency $F(i_{odd})$ is assigned to subcarriers with odd indices in accordance with:

$$F(i_{odd}) = Fc - (i+1)/2 \times Fsc; \text{ where } Fc = Fuc + Fus,$$

and

wherein i is an index, Fuc is a first frequency value and Fus is a second frequency value and Fsc is third frequency value.

Then, in step S1630, a plurality of bits from the subcarriers is demodulated in an order determined by the indices. Control then continues to step S1640 where the control sequence ends.

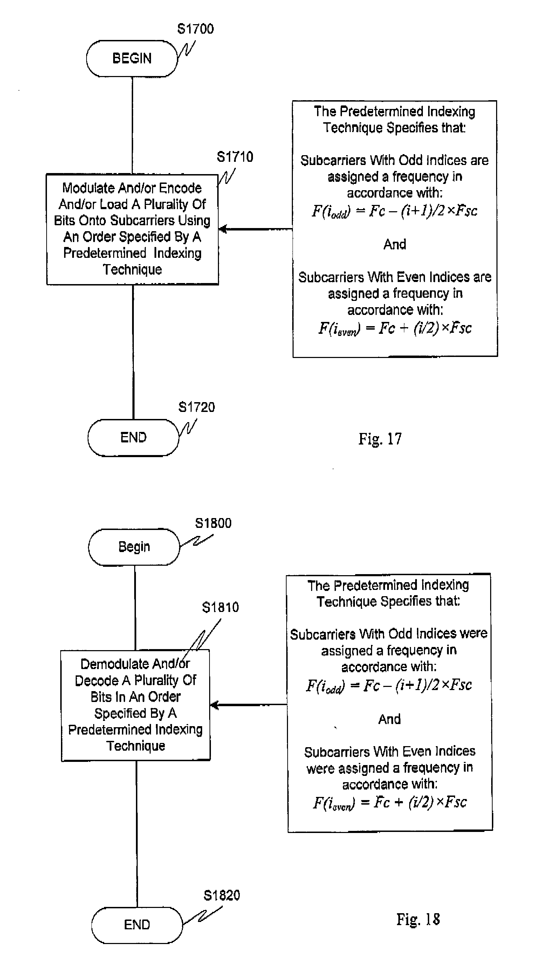

Another exemplary method of indexing subcarriers for transmission in passband OFDM communications is outlined in Fig. 17.

Specifically, control begins in step S1700 and continues to step S1710. In step S1710, bits are modulated and/or encoded and/or loaded onto subcarriers in an order specified by a predetermined indexing technique. The predetermined indexing technique specifies that:

a frequency $F(i_{even})$ is assigned to subcarriers with even indices in accordance with:

$$F(i_{even}) = Fc + (i/2) \times Fsc;$$

and,

a frequency $F(i_{odd})$ is assigned to subcarriers with odd indices in accordance with:

$$F(i_{odd}) = Fc - (i+1)/2 \times Fsc;$$

where Fc = Fuc + Fus, and wherein i is an index, Fuc is a first frequency value and Fus is a second frequency value and Fsc is third frequency value. Control then continues to step S1720 where the control sequence ends.

Another exemplary method of indexing subcarriers for reception in passband OFDM communications is illustrated in Fig. 18. Specifically, control begins in step S1800 and continues to Step S1810.

In step S1810, a plurality of bits from the subcarriers is demodulated and/or decoded in an order specified by a predetermined indexing technique. The predetermined indexing technique specifies that:

a frequency $F(i_{even})$ is assigned to subcarriers with even indices in accordance with:

$$F(i_{even}) = Fc + (i/2) \times Fsc;$$

a frequency $F(i_{odd})$ is assigned to subcarriers with odd indices in accordance with:

$$F(i_{odd}) = Fc - (i+1)/2 \times Fsc; \text{ where } Fc = Fuc + Fus,$$

wherein i is an index, Fuc is a first frequency value and Fus is a second frequency value and Fsc is third frequency value.

Control then continues to step S1820 where the control sequence ends.

Header Decodability Enhancements

Yet another exemplary embodiment of this invention is directed toward methods to enhance decodability of the header via sub-carrier redistribution. These techniques can be used independently from or in conjunction with the aforementioned methods. However, these methods can also be used as a complementary means to, for example, mitigate the side-effect of passband sub-carrier indexing shown in Fig. 13 as well as to provide the receiver a better chance to estimate the channel.

As illustrated in Fig. 4, the conventional preamble design uses the larger subcarrier spacing than the header or the payload in order to reduce the overhead (i.e., k1, k2 > 1). This in result makes the receiver design complicated because the channel response for sub-carriers which do not carry preamble signals ("non-preamble tones") can be only obtained from neighboring sub-carriers which carry preamble signals ("preamble tones"). Therefore, the SNR for non-preamble tones is lower than the SNR for preamble tones. Based on the preamble, the channel should be accurately estimated for all sub-carriers since the header and the payload utilize all sub-carriers to carry information.

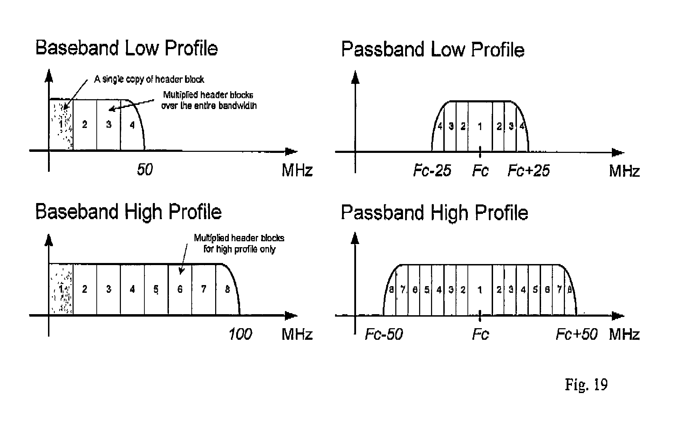

The conventional header design often contains multiple copies of the fixed (and often small) number of header information bits (header block) within a given bandwidth in order to increase frequency diversity. This is usually the case because the number of the header information bits is relatively small, and header information is often carried over one or more OFDM symbols which have much higher capacity. It is shown in Fig. 19 that low profile and high profile contains the same amount of header information, but different number of copies of the header blocks. That is, a low-profile device decoding only a portion of sub-carriers still can decode the full header information even though with decreased frequency diversity.

The indexing rules shown in Figs. 12 and 13 are used for baseband and passband profiles, respectively.

If a certain portion of header information always ends up being loaded on non-preamble tones, then it can degrade decodability of the entire header. In order to avoid such a case, one exemplary embodiment provides various sub-carrier redistribution methods for the header as a single header block is repeated multiple times over the entire bandwidth. This will guarantee that header information is evenly distributed between preamble and non-preamble tones.

Conventional Header Repetition Scheme

Assume that the header information bits will be encoded with r-rate FEC and modulated with M-bit constellation. The encoder output will be repeated multiple times to fill out one or more OFDM symbols and mapped to sub-carriers. That is, KH header information bits are encoded to NH FEC codeword (NH = 1/r × KH), and the 1st through Mth bits are loaded on the first tone, and the (M+1)th through (2M)th bits are loaded on the second tone, and so on. The tone block which corresponds to a single set of the header information will be referred to as the "header tone block" and the tone index within each block as the "header tone index."

For the purpose of illustration, the following parameters are used:

Maximum number of subcarriers: N = 2048.
Preamble structure: two-section preamble as described in §4.3.2.
Tone spacing for preamble: Fsc_preamble = 8 × Fsc.
For baseband bandplan, preamble tones are located at (k × Fsc_preamble)
where k = 4, 12, 20, ... , 2044 (total of 256 tones).
For RF bandplan, preamble tones are located at (Fc + k × Fsc_preamble)
where k = ±4, ±12, ±20, ... , ±1020 (total of 256 tones).
Header information block size: KH = 168.
½-rate FEC with QPSK modulation (r = ½, M = 2).
FEC Encoded Header information block size = 168 x 2 = 336
Tone spacing for the header: Fsc_header = FSC.
One OFDM symbol for the header.
Baseband sub-carrier indexing (Fig. 10) and Passband sub-carrier indexing (Fig. 11).

For this case, a single set of header information (168 bits) will be FEC encoded with the r=1/2 code resulting in an FEC encoded header information block size of 336 at the output of the FEC encoder. These 336 FEC encoded bits (or FEC bits) will be mapped to 168 sub-carriers with each bit modulating 2 bits (M=2). Since there are a total of 2048 tones in a given bandwidth, header information will be repeated a little more than 12 times over the entire bandwidth in one OFDM symbol provided that all sub-carriers are active. For all sub-carriers i = 0, ..., 2047, each header tone block would be mapped as {0, 1, 2, ..., 167}, {0, 1, 2, ..., 167}, ...

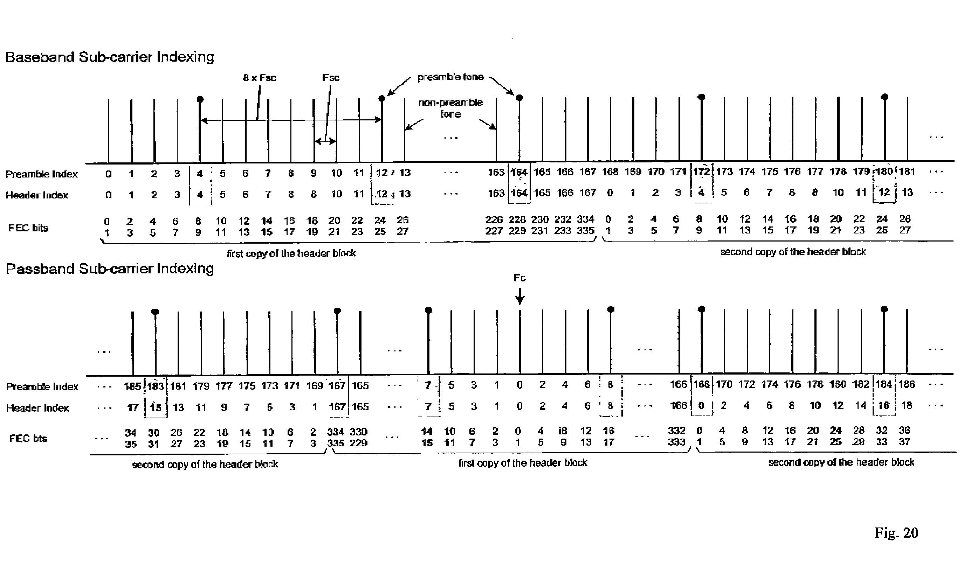

Fig. 20 illustrates how each sub-carrier in the header block is mapped to the actual frequency in the conventional header repetition scheme.

There are at least two exemplary problems with this repetition scheme:

1. In the baseband case, it can be easily seen that the preamble tones always carry a certain portion of header information. That is, 4th, 12th, ..., 164th header indices, corresponding to FEC bit pairs (8,9), (24,25 and (228,229) respectively, are always carried on preamble tones, whereas the rest of the FEC bits are always carried on non-preamble tones. A similar thing happens in the passband case. This is because the number of header information bits is a multiple of 8 (ratio of the number of non-preamble tones over the number of preamble tones in a given bandwidth). This is not desirable because the performance of the header can be limited by information carried on non-preamble tones.

2. In the passband case, the header information corresponding to even header tone indices always end up being on the right-half of the center frequency, and likewise odd header tone indices on the left-half. This is a side effect of alternating odd-even tone indexing scheme.

**Enhanced Header Repetition Schemes**

*Circular Shifting Sub-carriers within Each Header Block*

One exemplary technique is to change tone mapping as a copy of the header block is repeated over the entire bandwidth. For example, as each block of header information is repeated, a circular shift can be performed on the FEC codeword bits or the header indices. For instance, each header tone block can be mapped as such that the header index follows the following pattern: {0, 1, ... , 166, 167}, {1, 2, ... , 167, 0}, {2. 3, ..., 167, 0, 1}, ... for all sub-carriers i = 0, ...,

2047. Equivalently, the FEC encoder output can be circular-shifted by 2 bits after each consecutive codeword is concatenated together. Note that the outcome of this approach is similar to that of the previous approach.

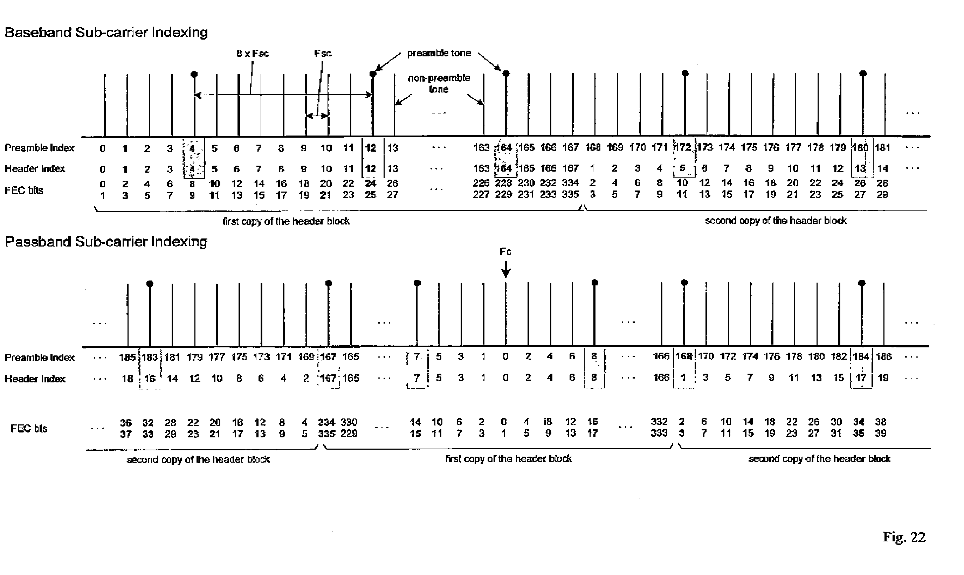

Figure 22 shows how pairs of FEC encoded bits are mapped to subcarriers. Note that different encoded bits are loaded on preamble tones for the second copy of header block. More specifically, a first set of bits from the first copy of the FEC codeword is modulated on a first set of preamble subcarriers and a second different set of bits from the second copy of the FEC codeword is modulated on a second set of preamble subcarriers. This is a result of the cyclically shifting of bits of FEC Encoded Header information block.

Also for the passband case, even and odd indices are evenly allocated around the center frequency.

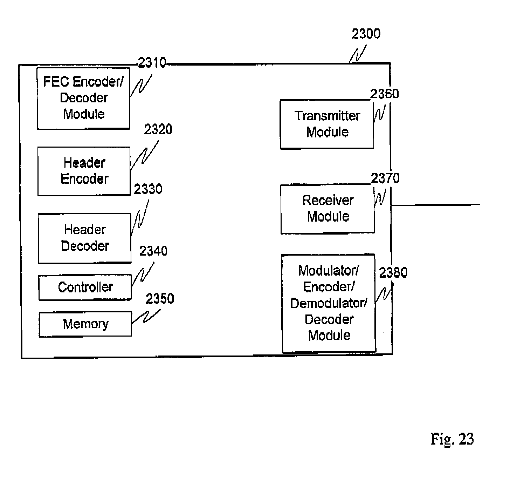

Fig. 23 illustrates an example of a transceiver 2300 capable of performing the enhanced header techniques disclosed herein. The transceiver 2300 comprises an FEC Encoder/Decoder 2310, a header encoder 2320, a header decoder 2330, controller 2340, memory 2350, a transmitter module 2360, and a receiver module 2370 and a modulator/encoder/demodulator/decoder module 2380, in addition to other well known components (not shown).

In one exemplary transmitter embodiment, a header is encoded for multicarrier communications in accordance with the following technique. Specifically, the FEC encoder 2310 encodes a plurality of bits using a forward error correction code and generates an FEC codeword comprising a plurality of encoded bits. The header encoder 2330 concatenates at least a first copy of the FEC codeword with at least a second copy of the FEC codeword and wherein the concatenating comprises cyclically shifting by two bits the second concatenated copy of the FEC codeword relative to the first concatenated copy of the FEC codeword. The modulating module 2380 then modulates first and second copies of the FEC codewords on at least one OFDM symbol for transmission by the transmitter module 2360.

In another exemplary transmitter embodiment, a header is encoded for multicarrier communications in accordance with the following technique. Specifically, the FEC encoder 2310 encodes a plurality of bits using a forward error correction code and generates an FEC codeword comprising a plurality of encoded bits. The header encoder 2320 concatenates a plurality of copies of the FEC codeword wherein the concatenating comprises cyclically shifting by two bits at least one concatenated copy of the FEC codeword relative to a previous concatenated copy of the FEC codeword. The modulating module 2380 then modulates the plurality of copies of the FEC codewords on at least one OFDM symbol for transmission by the transmitter module 2360.

In one exemplary receiver embodiment, the header is decoded in accordance with the following exemplary technique. The transceiver 2300 receives, with the cooperation of the receiver module 2370, a plurality of encoded bits comprising at least two concatenated copies of an FEC codeword. The FEC decoder 2310 decodes a first copy of the FEC codeword from the plurality of encoded bits to generate a first plurality of decoded bits. The FEC decoder 2310 decodes a second copy of the FEC codeword from the plurality of encoded bits to generate a second plurality of decoded bits, wherein the decoding comprises cyclically shifting by two bits the second copy of the FEC codeword relative to the first copy of the FEC codeword.

In another exemplary receiver embodiment, the header is decoded in accordance with the following exemplary technique. The transceiver 2300 receives, with the cooperation of the receiver module 2370, a plurality of encoded bits comprising a plurality of concatenated copies of an FEC codeword. The FEC decoder 2310 decodes at least two of the plurality of the concatenated copies of the FEC codeword wherein the decoding comprises cyclically shifting by two bits at least one concatenated copy of the FEC codeword relative to a previous concatenated copy of the FEC codeword.

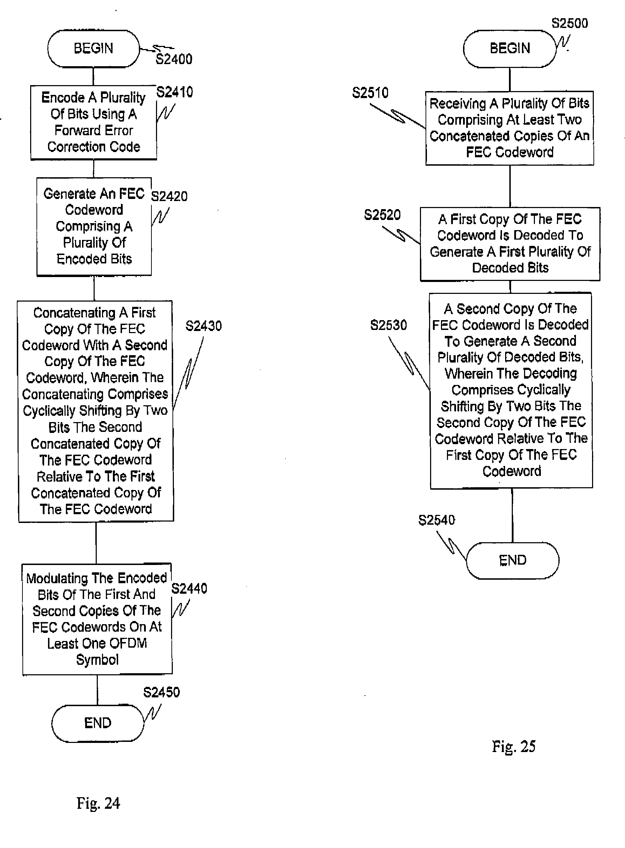

Figures 24 and 25 illustrate exemplary methods for header encoding and header decoding, respectively, according to an exemplary embodiment of this invention.

In Fig. 24, control for header encoding in multicarrier communications commences in step S2400 and continues to step S2410. In step S2410, a plurality of bits are encoded using a forward error correction code. Next, in step S2420, an FEC codeword is generated comprising a plurality of encoded bits. Then, in step S2430, a first copy of the FEC codeword is concatenated with a second copy of the FEC codeword wherein the concatenating comprises cyclically shifting by two bits the second concatenated copy of the FEC codeword relative to the first concatenated copy of the FEC codeword. Next, in step S2440, the encoded bits of the first and second copies of the FEC codewords are modulated on at least one OFDM symbol. Control then continues to step S2450 where the control sequence ends.

In Fig. 25, control begins in step S2500 and continues to step S2510. In step S2510. a plurality of encoded bits comprising at least two concatenated copies of an FEC codeword is received. Next, in step S2520, a first copy of the FEC codeword is decoded to generate a first plurality of decoded bits. Next, in step S2530, a second copy of the FEC codeword is decoded to generate a second plurality of decoded bits, wherein the decoding comprises cyclically shifting by two bits the second copy of the FEC codeword relative to the first copy of the FEC codeword. Control then continues to step S2540 where the control sequence ends.

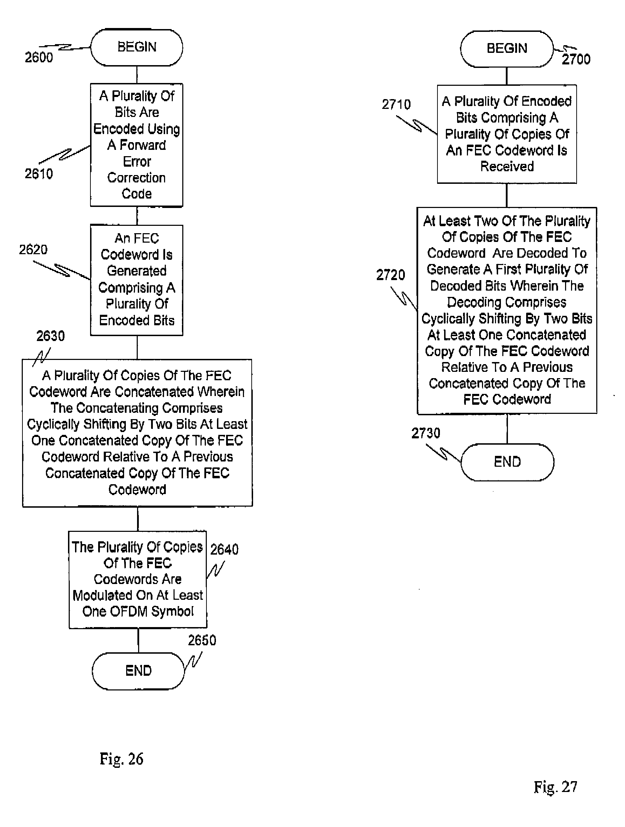

Figures 26 and 27 illustrate exemplary methods for header encoding and header decoding, respectively, according to another exemplary embodiment of this invention.

In Fig. 26, control for header encoding in multicarrier communications commences in step S2600 and continues to step S2610. In step S2610, a plurality of bits are encoded using a forward error correction code. Next, in step S2620, an FEC codeword is generated comprising a plurality of encoded bits. Then, in step S2630, a plurality of copies of the FEC codeword are concatenated wherein the concatenating comprises cyclically shifting by two bits at least one concatenated copy of the FEC codeword relative to a previous concatenated copy of the FEC codeword. Next, in step S2640, the plurality of copies of the FEC codewords are modulated on at least one OFDM symbol. Control then continues to step S2450 where the control sequence ends.

In Fig. 27, control begins in step S2700 and continues to step S2710. In step S2710, a plurality of encoded bits comprising a plurality of copies of an FEC codeword is received Next, in step S2720, at least two of the plurality of copies of the FEC codeword are decoded to generate a first plurality of decoded bits wherein the decoding comprises cyclically shifting by two bits at least one concatenated copy of the FEC codeword relative to a previous concatenated copy of the FEC codeword. Control then continues to step S2730 where the control sequence ends.

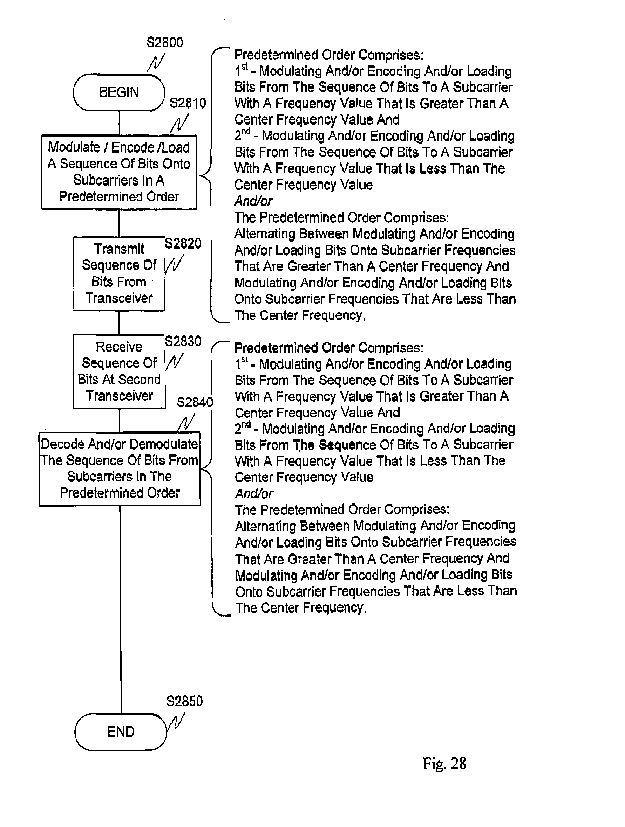

Fig. 28 illustrates another exemplary method of passband communications according to this invention. Control begins in step S2800 and continues to step S2810. In step S2810, a sequence of bits are modulated and/or encoded and/or loaded onto subcarriers in a predetermined order, wherein the predetermined order includes:

first modulating and/or encoding and/or loading bits from the sequence of bits to a subcarrier with a frequency value that is greater than a center frequency value, and

second modulating and/or encoding and/or loading bits from the sequence of bits to a subcarrier with a frequency value that is less than the center frequency value. Alternatively, or in addition, the sequence of bits are modulated and/or encoded and/or loaded onto subcarriers in a predetermined order, wherein the predetermined order comprises alternating between modulating and/or encoding and/or loading bits onto subcarrier frequencies that are greater than a center frequency and modulating and/or encoding and/or loading bits onto subcarrier frequencies that are less than the center frequency. The subcarrier frequency value can be greater than the center frequency value is Fc + n×Fsc and the subcarrier frequency value that is less than the center frequency is Fc - n×Fsc, wherein Fc is the value of center frequency in Hz and, Fsc is a value for subcarrier spacing in Hz, and n is an integer. Next, in step S2820, the sequence of bits is transmitted from a first transceiver. Control then continues to step S2830.

In step S2830, the sequence of bits are received at a second transceiver. Next, in step S2840, the sequence of bits are decoded and/or demodulated from subcarriers in an predetermined order, wherein the predetermined order comprises first decoding and/or demodulating bits from the sequence of bits from a subcarrier with a frequency value that is greater than a center frequency value and second decoding and/or demodulating bits from the sequence bits from a subcarrier with a frequency value that is less than the center frequency value. The subcarrier frequency value that is greater than the center frequency value is Fc + n×Fsc, and wherein the subcarrier frequency value that is less than the center frequency is Fc - n×Fsc, wherein Fc is the value of center frequency in Hz and, Fsc is a value for subcarrier spacing in Hz, and n is an integer. Alternatively or in addition, the sequence of bits can be decoded and/or demodulated from subcarriers in a predetermined order, wherein the predetermined order comprises alternating between decoding and/or demodulating bits from subcarrier frequencies that are greater than a center frequency and decoding and/or demodulating bits from subcarrier frequencies that are less than the center frequency. Control then continues to step S2850 where the control sequence ends.

The above-described methods and systems and can be implemented in a software module, a software and/or hardware testing module, a telecommunications test device, a DSL modem, an ADSL modem, an xDSL modem, a VDSL modem, a linecard, a G.hn transceiver, a MOCA transceiver, a Homeplug transceiver, a powerline modem, a wired or wireless modem, test equipment, a multicarrier transceiver, a wired and/or wireless wide/local area network system, a satellite communication system, network-based communication systems, such as an IP, Ethernet or ATM system, a modem equipped with diagnostic capabilities, or the like, or on a separate programmed general purpose computer having a communications device or in conjunction with any of the following communications protocols: CDSL, ADSL2, ADSL2+, VDSL1, VDSL2, HDSL, DSL Lite, IDSL, RADSL, SDSL, UDSL, MOCA, G.hn, Homeplug® or the like.

Additionally, the systems, methods and protocols of this invention can be implemented on a special purpose computer, a programmed microprocessor or microcontroller and peripheral integrated circuit element(s), an ASIC or other integrated circuit, a digital signal processor, a flashable device, a hard-wired electronic or logic circuit such as discrete element circuit, a programmable logic device such as PLD, PLA, FPGA, PAL, a modem, a transmitter/receiver, any comparable means, or the like. In general, any device capable of implementing a state machine that is in turn capable of implementing the methodology illustrated herein can be used to implement the various communication methods, protocols and techniques according to this invention. While the systems and means disclosed herein are described in relation to various functions that are performed, it is to be appreciated that the systems and means may not always perform all of the various functions, but are capable of performing one or more of the disclosed functions.

Furthermore, the disclosed methods may be readily implemented in software using object or object-oriented software development environments that provide portable source code that can be used on a variety of computer or workstation platforms. Alternatively, the disclosed system may be implemented partially or fully in hardware using standard logic circuits or VLSI design. Whether software or hardware is used to implement the systems in accordance with this invention is dependent on the speed and/or efficiency requirements of the system, the particular function, and the particular software or hardware systems or microprocessor or microcomputer systems being utilized. The communication systems, methods and protocols illustrated herein can be readily implemented in hardware and/or software using any known or later developed systems or structures, devices and/or software by those of ordinary skill in the applicable art from the functional description provided herein and with a general basic knowledge of the computer and telecommunications arts.

Moreover, the disclosed methods may be readily implemented in software that can be stored on a computer-readable medium, executed on programmed general-purpose computer with the cooperation of a controller and memory, a special purpose computer, a microprocessor, or the like. In these instances, the systems and methods of this invention can be implemented as program embedded on personal computer such as an applet, JAVA® or CGI script, as a resource residing on a server or computer workstation, as a routine embedded in a dedicated communication system or system component, or the like. The system can also be implemented by physically incorporating the system and/or method into a software and/or hardware system, such as the hardware and software systems of communication device.

While the invention is described in terms of exemplary embodiments, it should be appreciated that individual aspects of the invention could be separately claimed and one or more of the features of the various embodiments can be combined.

While the systems and means disclosed herein are described in relation to various functions that are performed, it is to be appreciated that the systems and means may not always perform all of the various functions, but are capable of performing one or more of the disclosed functions.

While the exemplary embodiments illustrated herein disclose the various components as collocated, it is to be appreciated that the various components of the system can be located at distant portions of a distributed network, such as a telecommunications network and/or the Internet or within a dedicated communications network. Thus, it should be appreciated that the components of the system can be combined into one or more devices or collocated on a particular node of a distributed network, such as a telecommunications network. As will be appreciated from the following description, and for reasons of computational efficiency, the components of the communications network can be arranged at any location within the distributed network without affecting the operation of the system.

It is therefore apparent that there has been provided, in accordance with the present invention, systems and methods for PSD management. While this invention has been described in conjunction with a number of embodiments, it is evident that many alternatives, modifications and variations would be or are apparent to those of ordinary skill in the applicable arts. Accordingly, it is intended to embrace all such alternatives, modifications, equivalents and variations that are within the spirit and scope of this invention.

Further aspects of the invention are:

1. A method for embedding profile information in a packet preamble comprising:

one or more of determining or receiving an indication as to a profile to be used for communication of a packet;

one or more of encoding or indicating which profile will be used for transmission of the packet, wherein:

the profile information can be indicated based on one or more of:

phase of the subcarriers in the preamble,

amplitude of subcarriers in the preamble,

subcarrier spacing of subcarriers in the preamble,

number of subcarriers in the preamble, and

indexes of transmitted subcarriers in the preamble.

2. The method of aspect 1, further comprising completing packet generation.

3. The method of aspect 2, further comprising transmitting the completed packet.

4. A method for determining a profile used for transmission of a packet comprising:

detecting one or more of:

phase of subcarriers in a preamble,

amplitude of subcarriers in the preamble,

subcarrier spacing of subcarriers in the preamble,

number of subcarriers in the preamble, and

indexes of transmitted subcarriers in the preamble; and

selecting a profile based on the detecting step.

5. The method of aspect 4, wherein a header decoding is bypassed.

6. A packet transmission method comprising:

selecting one of a first profile and a second profile to be used for transmission of the packet;

if the first profile is to be used, one or more of the following specify, in the preamble, the profile used:

a first value for one or more phases of the subcarriers in the preamble,

a first value for one or more amplitudes of subcarriers in the preamble,

a first value for subcarrier spacing of subcarriers in the preamble,

a first value for a number of subcarriers in the preamble, and

a first set of indexes of transmitted subcarriers in the preamble;

if the second profile is to be used, one or more of the following specify, in the preamble, the profile used:

a second value for one or more phases of the subcarriers in the preamble,

a second value for one or more amplitudes of subcarriers in the preamble,

a second value for a subcarrier spacing of subcarriers in the preamble,

a second value for a number of subcarriers in the preamble, and

a second set of indexes of transmitted subcarriers in the preamble.

7. The method of aspect 6, further comprising completing packet generation.

8. The method of aspect 7, further comprising transmitting the packet.

9. A packet reception method comprising:

receiving a packet that was transmitted with either a first profile or a second profile; and

detecting one or more of the following values:

a first or second value for one or more phases of the subcarriers in a preamble,

a first or second value for one or more amplitudes of subcarriers in the preamble,

a first or second for subcarrier spacing of subcarriers in the preamble,

a first or second for a number of subcarriers in the preamble, and

a first or second set of indexes of transmitted subcarriers in the preamble.

10. The method of aspect 9, wherein the first values correspond to a first profile and the second values correspond to a second profile.

11. A method of indexing subcarriers in passband OFDM communications comprising:

assigning a frequency $F(i_{even})$ to subcarriers with even indices in accordance with:

$$F(i_{even}) = Fc + (i/2) \times Fsc;$$

and

assigning a frequency $F(i_{odd})$ to subcarriers with odd indices in accordance with:

$$F(i_{odd}) = Fc - (i+1)/2 \times Fsc;$$

where Fc = Fuc + Fus, and

wherein i is an index, Fuc is a first frequency value, Fus is a second frequency value and Fsc is third frequency value.

12. The method of aspect 11, wherein the index i can take on values between 0 and N-1, wherein N is an integer.

13. The method of aspect 11, wherein the first frequency Fuc is an up-shift frequency.

14. The method of aspect 11, wherein the second frequency Fus is an up-conversion frequency.

15. The method of aspect 11, wherein the indexing is used for loading data on to subcarriers.

16. The method of aspect 15, wherein the data is header information.

17. The method of aspect 15, wherein the data is payload information.

18. The method of aspect 11, further comprising one or more of loading or encoding one or more bits onto subcarriers in an order specified by the indices.

19. A method of indexing subcarriers for reception in passband OFDM communications comprising:

assigning a frequency $F(i_{even})$ to subcarriers with even indices in accordance with:

$$F(i_{even}) = Fc + (i/2) \times Fsc;$$

assigning a frequency $F(i_{odd})$ to subcarriers with odd indices in accordance with:

$$F(i_{odd}) = Fc - (i+1)/2 \times Fsc;$$

and

where Fc = Fuc + Fus, and

wherein i is an index, Fuc is a first frequency value and Fus is a second frequency value and Fsc is third frequency value.

20. The method of aspect 19, wherein a plurality of bits from the subcarriers are demodulated in an order determined by the indices.

21. A method for indexing subcarriers for transmission in passband OFDM communications comprising:

modulating and/or encoding and/or loading bits onto subcarriers in an order specified by a predetermined indexing technique, wherein the predetermined indexing technique specifies that:

a frequency $F(i_{even})$ is assigned to subcarriers with even indices in accordance with:

$$F(i_{even}) = Fc + (i/2) \times Fsc;$$

and,

a frequency $F(i_{odd})$ is assigned to subcarriers with odd indices in accordance with:

$$F(i_{odd}) = Fc - (i+1)/2 \times Fsc;$$

where Fc = Fuc + Fus, and wherein i is an index, Fuc is a first frequency value, Fus is a second frequency value and Fsc is third frequency value.

22. A method of indexing subcarriers for reception in passband OFDM communications comprising:

demodulating and/or decoding a plurality of bits from the subcarriers in an order specified by a predetermined indexing technique, wherein the predetermined indexing technique specifies that:

a frequency $F(i_{even})$ is assigned to subcarriers with even indices in accordance with:

$$F(i_{even}) = Fc + (i/2) \times Fsc;$$

a frequency $F(i_{odd})$ is assigned to subcarriers with odd indices in accordance with:

$$F(i_{odd}) = Fc - (i+1)/2 \times Fsc;$$

where Fc = Fuc + Fus,

wherein i is an index, Fuc is a first frequency value, Fus is a second frequency value and Fsc is third frequency value.

23. A method for header encoding comprising:

encoding a plurality of bits using a forward error correction code;

generating an FEC codeword comprising a plurality of encoded bits; and

concatenating a first copy of the FEC codeword with a second copy of the FEC codeword, wherein the concatenating comprises cyclically shifting by two bits the second concatenated copy of the FEC codeword relative to the first concatenated copy of the FEC codeword.

24. The method of aspect 23, wherein the encoded bits of the first and second copies of the FEC codewords are modulated on at least one OFDM symbol.

25. A method for header decoding comprising:

receiving a plurality of encoded bits comprising at least two concatenated copies of an FEC codeword;

decoding a first copy of the FEC codeword to generate a first plurality of decoded bits; and

decoding a second copy of the FEC codeword to generate a second plurality of decoded bits, wherein the decoding comprises cyclically shifting by two bits the second copy of the FEC codeword relative to the first copy of the FEC codeword.

26. A method for header encoding comprising:

encoding a plurality of bits using a forward error correction code;

generating an FEC codeword comprising a plurality of encoded bits; and

concatenating a plurality of copies of the FEC codeword, wherein the concatenating comprises cyclically shifting by two bits at least one concatenated copy of the FEC codeword relative to a previous concatenated copy of the FEC codeword.

27. The method of aspect 26, further comprising modulating the plurality of copies of the FEC codewords on at least one OFDM symbol.

28. A method for header decoding comprising:

receiving a plurality of encoded bits comprising a plurality of copies of an FEC codeword; and

decoding at least two of the plurality of copies of the FEC codeword to generate a first plurality of decoded bits, wherein the decoding comprises cyclically shifting by two bits at least one concatenated copy of the FEC codeword relative to a previous concatenated copy of the FEC codeword.

29. A method of header encoding in multicarrier communications comprising:

generating an FEC codeword comprising a plurality of coded bits;

concatenating a first copy of the FEC codeword with a second copy of the FEC codeword; and

cyclically shifting by two bits the second concatenated copy of the FEC codeword relative to the first concatenated copy of the FEC codeword.

30. The method of aspect 29, further comprising modulating the coded bits of the first and second copies of the FEC codewords on at least one OFDM symbol.,

31. The method of aspect 29, wherein the cyclically shifting results in a first set of bits from the first copy of the FEC codeword being modulated on a first set of preamble subcarriers and a second different set of bits from the second set of bits being modulated on a second set of preamble subcarriers.

32. A method of distributing header information comprising:

assigning header information to a plurality of preamble tones; and

reassigning the header information to a plurality of non-preamble tones.

33. A method of indexing subcarriers in passband OFDM communications comprising:

indexing subcarriers in a first frequency bandwidth; and

indexing subcarriers in a second frequency bandwidth, wherein the frequencies of the second bandwidth are a subset of the frequencies in the first bandwidth, wherein the index of all subcarriers in the second bandwidth are the same as the index of subcarriers in the subset of the first bandwidth.

34. A multicarrier communication system comprising:

a first profile with a first indexing of subcarriers;

a second profile with a second indexing of subcarriers, wherein the second profile uses a subset of the frequency bandwidth of the first profile, and

wherein the index of all subcarriers in the second profile are the same as the index of subcarriers in the subset of frequencies of the first profile.

35. A method for transmitting or receiving packets in passband OFDM communications comprising:

transmitting or receiving a first packet using a first profile;

transmitting or receiving a second packet using a second profile, wherein the second profile uses a subset of the frequency bandwidth of the first profile, and

wherein the index of all subcarriers in the second profile are the same as the index of subcarriers in the subset of frequencies of the first profile.

36. A passband OFDM communications transceiver capable of transmitting or receiving a first packet using a first profile, and capable of transmitting or receiving a second packet using a second profile wherein:

the second profile uses a subset of the frequency bandwidth of the first profile, and

the index of all subcarriers in the second profile are the same as the index of subcarriers in the subset of frequencies of the first profile.

37. In an OFDM transceiver, a method comprising:

transmitting or receiving a packet with a preamble portion, the preamble portion comprising information that can be used to determine a profile of the packet.

38. The method of aspect 37, further wherein the information is indicated using one or more of the following:

a phase of subcarriers in preamble,

an amplitude of subcarriers in the preamble,

subcarrier spacing of subcarriers in the preamble,

a number of subcarriers in the preamble, and

indexes of transmitted subcarriers in the preamble.

39. A header repetition method which constantly changes mapping of sub-carriers within a header block as it is multiplied over the entire bandwidth so that header information is evenly distributed between preamble tones and non-preamble tones by:

circular-shifting, either to the left or the right, of sub-carrier indices within a single header block;

arbitrary tone-interleaving scheme within a single header block which can be different a block from a block; and/or

circular-shifting, either to the left or the right, of the FEC output as each block is mapped to sub-carriers; and/or data scrambling of the FEC output as each block is mapped to sub-carriers.

40. A header repetition method in which the number of sub-carriers corresponding to a single set of header information bits and the ratio of the number of non-preamble tones over the number of preamble tones are co-prime or even-odd pair.

41. A computer readable storage media having stored thereon instructions that if executed are for embedding profile information in a packet preamble comprising:

information that one or more of determines or receives an indication as to a profile to be used for communication of a packet;
information that one or more of encodes or indicates which profile will be used for transmission of the packet, wherein:

the profile information can be indicated based on one or more of:

phase of the subcarriers in the preamble,

amplitude of subcarriers in the preamble,

subcarrier spacing of subcarriers in the preamble,

number of subcarriers in the preamble, and

indexes of transmitted subcarriers in the preamble.

42. The media of aspect 41, further comprising information that completes packet generation.

43. The media of aspect 42, further comprising information that transmits the completed packet.

44. A computer-readable media having stored thereon instructions that if executed are for determining a profile used for transmission of a packet comprising:

information that detects one or more of:

phase of subcarriers in a preamble,

amplitude of subcarriers in the preamble,

subcarrier spacing of subcarriers in the preamble,

number of subcarriers in the preamble, and

indexes of transmitted subcarriers in the preamble; and

information that selects a profile based on the detecting step.

45. The media of aspect 44, wherein a header decoding is bypassed.

46. A computer-readable media having stored thereon instructions that if executed are for packet transmission comprising:

information that selects one of a first profile and a second profile to be used for transmission of the packet; if the first profile is to be used, one or more of the following specify, in the preamble, the profile used:

a first value for one or more phases of the subcarriers in the preamble,

a first value for one or more amplitudes of subcarriers in the preamble,

a first value for subcarrier spacing of subcarriers in the preamble,

a first value for a number of subcarriers in the preamble, and

a first set of indexes of transmitted subcarriers in the preamble;

if the second profile is to be used, one or more of the following specify, in the preamble, the profile used:

a second value for one or more phases of the subcarriers in the preamble,

a second value for one or more amplitudes of subcarriers in the preamble,

a second value for a subcarrier spacing of subcarriers in the preamble,

a second value for a number of subcarriers in the preamble, and

a second set of indexes of transmitted subcarriers in the preamble.

47. The media of aspect 46, further comprising information that completes packet generation.

48. The media of aspect 47, further comprising information that transmits the packet.

49. A computer-readable media having stored thereon instructions that if executed are for packet reception comprising:

information that receives a packet that was transmitted with either a first profile or a second profile; and

information that detects one or more of the following values:

a first or second value for one or more phases of the subcarriers in a preamble,

a first or second value for one or more amplitudes of subcarriers in the preamble,

a first or second for subcarrier spacing of subcarriers in the preamble,

a first or second for a number of subcarriers in the preamble, and

a first or second set of indexes of transmitted subcarriers in the preamble.

50. The media of aspect 49, wherein the first values correspond to a first profile and the second values correspond to a second profile.

51. A computer-readable media having stored thereon instructions that if executed are for indexing subcarriers in passband OFDM communications comprising:

information that assigns a frequency $F(i_{even})$ to subcarriers with even indices in accordance with:

$$F(i_{even}) = Fc + (i/2) \times Fsc;$$

and

information that assigns a frequency $F(i_{odd})$ to subcarriers with odd indices in accordance with:

$$F(i_{odd}) = Fc - (i+1)/2 \times Fsc;$$

where Fc = Fuc + Fus, and

wherein i is an index, Fuc is a first frequency value, Fus is a second frequency value and Fsc is third frequency value.

52. The media of aspect 51, wherein the index i can take on values between 0 and N-1, wherein N is an integer.

53. The media of aspect 51, wherein the first frequency Fuc is an up-shift frequency.

54. The media of aspect 51, wherein the second frequency Fus is an up-conversion frequency.

55. The media of aspect 51, wherein the indexing is used for loading data on to subcarriers.

56. The media of aspect 55, wherein the data is header information.

57. The media of aspect 55, wherein the data is payload information.

58. The media of aspect 51, further comprising information that one or more of loads or encodes one or more bits onto subcarriers in an order specified by the indices.

59. A computer-readable media having stored thereon instructions that if executed are for indexing subcarriers for reception in passband OFDM communications comprising:

information that assigns a frequency $F(i_{even})$ to subcarriers with even indices in accordance with:

$$F(i_{even}) = Fc + (i/2) \times Fsc;$$

information that assigns a frequency $F(i_{odd})$ to subcarriers with odd indices in accordance with:

$$F(i_{odd}) = Fc - (i+1)/2 \times Fsc;$$

and

where Fc = Fuc + Fus, and

wherein i is an index, Fuc is a first frequency value and Fus is a second frequency value and Fsc is third frequency value.

60. The media of aspect 59, wherein a plurality of bits from the subcarriers are demodulated in an order determined by the indices.

61. A computer-readable media having stored thereon instructions that if executed are for indexing subcarriers for transmission in passband OFDM communications comprising:

information that modulates and/or encodes and/or loads bits onto subcarriers in an order specified by a predetermined indexing technique, wherein the predetermined indexing technique specifies that:

a frequency $F(i_{even})$ is assigned to subcarriers with even indices in accordance with:

$$F(i_{even}) = Fc + (i/2) \times Fsc;$$

and,

a frequency $F(i_{odd})$ is assigned to subcarriers with odd indices in accordance with:

$$F(i_{odd}) = Fc - (i+1)/2 \times Fsc;$$

where Fc = Fuc + Fus, and wherein i is an index, Fuc is a first frequency value, Fus is a second frequency value and Fsc is third frequency value.

62. A computer-readable media having stored thereon instructions that if executed are for indexing subcarriers for reception in passband OFDM communications comprising:

information that demodulates and/or decodes a plurality of bits from the subcarriers in an order specified by a predetermined indexing technique, wherein the predetermined indexing technique specifies that:

a frequency $F(i_{even})$ is assigned to subcarriers with even indices in accordance with:

$$F(i_{even}) = Fc + (i/2) \times Fsc;$$

a frequency $F(i_{odd})$ is assigned to subcarriers with odd indices in accordance with:

$$F(i_{odd}) = Fc - (i+1)/2 \times Fsc; \text{ where } Fc = Fuc + Fus,$$

wherein i is an index, Fuc is a first frequency value, Fus is a second frequency value and Fsc is third frequency value.

63. A computer-readable media having stored thereon instructions that if executed are for header encoding comprising:

information that encodes a plurality of bits using a forward error correction code;

information that generates an FEC codeword comprising a plurality of encoded bits; and

information that concatenates a first copy of the FEC codeword with a second copy of the FEC codeword, wherein the concatenation comprises cyclically shifting by two bits the second concatenated copy of the FEC codeword relative to the first concatenated copy of the FEC codeword.

64. The media of aspect 63, wherein the encoded bits of the first and second copies of the FEC codewords are modulated on at least one OFDM symbol

65. A computer-readable media having stored thereon instructions that if executed are for header decoding comprising:

information that receives a plurality of encoded bits comprising at least two concatenated copies of an FEC codeword;

information that decodes a first copy of the FEC codeword to generate a first plurality of decoded bits; and

information that decodes a second copy of the FEC codeword to generate a second plurality of decoded bits, wherein the decoding comprises cyclically shifting by two bits the second copy of the FEC codeword relative to the first copy of the FEC codeword.

66. A computer-readable media having stored thereon instructions that if executed are for header encoding comprising:

information that encodes a plurality of bits using a forward error correction code;

information that generates an FEC codeword comprising a plurality of encoded bits; and

information that concatenates a plurality of copies of the FEC codeword, wherein the concatenation comprises cyclically shifting by two bits at least one concatenated copy of the FEC codeword relative to a previous concatenated copy of the FEC codeword.

67. The media of aspect 66, further comprising information that modulates the plurality of copies of the FEC codewords on at least one OFDM symbol.

68. A computer-readable media having stored thereon instructions that if executed are for header decoding comprising:

information that receives a plurality of encoded bits comprising a plurality of copies of an FEC codeword; and

information that decodes at least two of the plurality of copies of the FEC codeword to generate a first plurality of decoded bits, wherein the decoding comprises cyclically shifting by two bits at least one concatenated copy of the FEC codeword relative to a previous concatenated copy of the FEC codeword.

69. A computer-readable media having stored thereon instructions that if executed are for header encoding in multicarrier communications comprising:

information that generates an FEC codeword comprising a plurality of coded bits;

information that concatenates a first copy of the FEC codeword with a second copy of the FEC codeword; and

information that cyclically shifts by two bits the second concatenated copy of the FEC codeword relative to the first concatenated copy of the FEC codeword.

70. The media of aspect 69, further comprising information that modulates the coded bits of the first and second copies of the FEC codewords on at least one OFDM symbol.

71. The media of aspect 69, wherein the cyclically shifting results in a first set of bits from the first copy of the FEC codeword being modulated on a first set of preamble subcarriers and a second different set of bits from the second set of bits being modulated on a second set of preamble subcarriers.

72. A computer-readable media having stored thereon instructions that if executed are for distributing header information comprising:

information that assigns header information to a plurality of preamble tones; and

information that reassigns the header information to a plurality of non-preamble tones.

73. A computer-readable media having stored thereon instructions that if executed are for indexing subcarriers in passband OFDM communications comprising:

information that indexes subcarriers in a first frequency bandwidth; and

information that indexes subcarriers in a second frequency bandwidth, wherein the frequencies of the second bandwidth are a subset of the frequencies in the first bandwidth, wherein the index of all subcarriers in the second bandwidth are the same as the index of subcarriers in the subset of the first bandwidth.

74. A computer-readable media having stored thereon instructions that if executed are for multicarrier communications comprising:

information that stores first profile with a first indexing of subcarriers;

information that stores second profile with a second indexing of subcarriers, wherein the second profile uses a subset of the frequency bandwidth of the first profile, and

wherein the index of all subcarriers in the second profile are the same as the index of subcarriers in the subset of frequencies of the first profile.

75. A computer-readable media having stored thereon instructions that if executed are for transmitting or receiving packets in passband OFDM communications comprising:

information that transmits or receives a first packet using a first profile;

information that transmits or receives a second packet using a second profile, wherein the second profile uses a subset of the frequency bandwidth of the first profile, and

wherein the index of all subcarriers in the second profile are the same as the index of subcarriers in the subset of frequencies of the first profle.

76. A computer-readable media having stored thereon instructions that if executed are for passband OFDM communications in a transceiver capable of transmitting or receiving a first packet using a first profile, and capable of transmitting or receiving a second packet using a second profile wherein:

the second profile uses a subset of the frequency bandwidth of the first profile; and

the index of all subcarriers in the second profile are the same as the index of sub-carriers in the subset of frequencies of the first profile.

77. A computer-readable media having stored thereon instructions that if executed are for an OFDM transceiver, a media comprising:

information that transmits or receives a packet with a preamble portion, the preamble portion comprising information that can be used to determine a profile of the packet.

78. The media of aspect 77, further wherein the information is indicated using one or more of the following:

a phase of subcarriers in preamble,

an amplitude of subcarriers in the preamble,

subcarrier spacing of subcarriers in the preamble,

a number of subcarriers in the preamble, and

indexes of transmitted subcarriers in the preamble.

79. A computer-readable media having stored thereon instructions that if executed are for header repetition which constantly changes mapping of sub-carriers within a header block as it is multiplied over the entire bandwidth so that header information is evenly distributed between preamble tones and non-preamble tones by:

circular-shifting, either to the left or the right, of sub-carrier indices within a single header block;

arbitrary tone-interleaving scheme within a single header block which can be different a block from a block; and/or

circular-shifting, either to the left or the right, of the FEC output as each block is mapped to sub-carriers; and/or data scrambling of the FEC output as each block is mapped to sub-carriers.

80. A computer-readable media having stored thereon instructions that if executed are for header repetition in which the number of sub-carriers corresponding to a single set of header information bits and the ratio of the number of non-preamble tones over the number of preamble tones are co-prime or even-odd pair.

81. Means for embedding profile information in a packet preamble comprising:

means for one or more of determining or receiving an indication as to a profile to be used for communication of a packet;

means for one or more of encoding or indicating which profile will be used for transmission of the packet, wherein:

the profile information can be indicated based on one or more of:

phase of the subcarriers in the preamble,

amplitude of subcarriers in the preamble,

subcarrier spacing of subcarriers in the preamble,

number of subcarriers in the preamble, and

indexes of transmitted subcarriers in the preamble.

82. The means of aspect 81, further comprising means for completing packet generation.

83. The means of aspect 82, further comprising means for transmitting the completed packet.

84. Means for determining a profile used for transmission of a packet comprising:

means for detecting one or more of:

phase of subcarriers in a preamble,

amplitude of subcarriers in the preamble,

subcarrier spacing of subcarriers in the preamble,

number of subcarriers in the preamble, and

indexes of transmitted subcarriers in the preamble; and

means for selecting a profile based on the detecting step.

85. The means of aspect 84, wherein a header decoding is bypassed.

86. A packet transmission means comprising:

means for selecting one of a first profile and a second profile to be used for transmission of the packet;

if the first profile is to be used, one or more of the following specify, in the preamble, the profile used:

a first value for one or more phases of the subcarriers in the preamble,

a first value for one or more amplitudes of subcarriers in the preamble,

a first value for subcarrier spacing of subcarriers in the preamble,

a first value for a number of subcarriers in the preamble, and

a first set of indexes of transmitted subcarriers in the preamble;

if the second profile is to be used, one or more of the following specify, in the preamble, the profile used:

a second value for one or more phases of the subcarriers in the preamble,

a second value for one or more amplitudes of subcarriers in the preamble,

a second value for a subcarrier spacing of subcarriers in the preamble,

a second value for a number of subcarriers in the preamble, and

a second set of indexes of transmitted subcarriers in the preamble.

87. The means of aspect 86, further comprising means for completing packet generation.

88. The means of aspect 87, further comprising means for transmitting the packet.

89. A packet reception means comprising:

means for receiving a packet that was transmitted with either a first profile or a second profile; and

means for detecting one or more of the following values:

a first or second value for one or more phases of the subcarriers in a preamble,

a first or second value for one or more amplitudes of subcarriers in the preamble,

a first or second for subcarrier spacing of subcarriers in the preamble,

a first or second for a number of subcarriers in the preamble, and

a first or second set of indexes of transmitted subcarriers in the preamble.

90. The means of aspect 89, wherein the first values correspond to a first profile and the second values correspond to a second profile.

91. Means for indexing subcarriers in passband OFDM communications comprising:

assigning a frequency $F(i_{even})$ to subcarriers with even indices in accordance with:

$$F(i_{even}) = Fc + (i/2) \times Fsc;$$

and

assigning a frequency $F(i_{odd})$ to subcarriers with odd indices in accordance with:

$$F(i_{odd}) = Fc - (i+1)/2 \times Fsc;$$

where Fc = Fuc + Fus, and

wherein *i* is an index, Fuc is a first frequency value, Fus is a second frequency value and Fsc is third frequency value.

92. The means of aspect 91, wherein the index i can take on values between 0 and N-1, wherein N is an integer.

93. The means of aspect 91, wherein the first frequency Fuc is an up-shift frequency.

94. The means of aspect 91, wherein the second frequency Fus is an up-conversion frequency.

95. The means of aspect 91, wherein the indexing is used for loading data on to subcarriers.

96. The means of aspect 95, wherein the data is header information,

97. The means of aspect 95, wherein the data is payload information.

98. The means of aspect 91, further comprising one or more of loading or encoding one or more bits onto subcarriers in an order specified by the indices.

99. Means for indexing subcarriers for reception in passband OFDM communications comprising:

assigning a frequency $F(i_{even})$ to subcarriers with even indices in accordance with:

$$F(i_{even}) = Fc + (i/2) \times Fsc;$$

assigning a frequency $F(i_{odd})$ to subcarriers with odd indices in accordance with:

$$F(i_{odd}) = Fc - (i+1)/2 \times Fsc;$$

and

where Fc = Fuc + Fus, and

wherein i is an index, Fuc is a first frequency value and Fus is a second frequency value and Fsc is third frequency value.

100. The means of aspect 99, wherein a plurality of bits from the subcarriers are demodulated in an order determined by the indices.

101. Means for indexing subcarriers for transmission in passband OFDM communications comprising:

means for modulating and/or encoding and/or loading bits onto subcarriers in an order specified by a predetermined indexing technique, wherein the predetermined indexing technique specifies that:

a frequency $F(i_{even})$ is assigned to subcarriers with even indices in accordance with:

$$F(i_{even}) = Fc + (i/2) \times Fsc;$$

and,

a frequency $F(i_{odd})$ is assigned to subcarriers with odd indices in accordance with:

$$F(i_{odd}) = Fc - (i+1)/2 \times Fsc;$$

where Fc = Fuc + Fus, and wherein i is an index, Fuc is a first frequency value, Fus is a second frequency value and Fsc is third frequency value.

102. Means for indexing subcarriers for reception in passband OFDM communications comprising:

means for demodulating and/or decoding a plurality of bits from the subcarriers in an order specified by a predetermined indexing technique, wherein the predetermined indexing technique specifies that:

a frequency $F(i_{even})$ is assigned to subcarriers with even indices in accordance with:

$$F(i_{even}) = Fc + (i/2) \times Fsc;$$

a frequency $F(i_{odd})$ is assigned to subcarriers with odd indices in accordance with:

$$F(i_{odd}) = Fc - (i+1)/2 \times Fsc;$$

where Fc = Fuc + Fus,

wherein i is an index, Fuc is a first frequency value, Fus is a second frequency value and Fsc is third frequency value.

103. Means for header encoding comprising:

means for encoding a plurality of bits using a forward error correction code;

means for generating an FEC codeword comprising a plurality of encoded bits; and

means for concatenating a first copy of the FEC codeword with a second copy of the FEC codeword, wherein the concatenating comprises cyclically shifting by two bits the second concatenated copy of the FEC codeword relative to the first concatenated copy of the FEC codeword.

104. The means of aspect 103, wherein the encoded bits of the first and second copies of the FEC codewords are modulated on at least one OFDM symbol

105. Means for header decoding comprising:

means for receiving a plurality of encoded bits comprising at least two concatenated copies of an FEC codeword;

means for decoding a first copy of the FEC codeword to generate a first plurality of decoded bits; and

means for decoding a second copy of the FEC codeword to generate a second plurality of decoded bits, wherein the decoding comprises cyclically shifting by two bits the second copy of the FEC codeword relative to the first copy of the FEC codeword.

106. Means for header encoding comprising:

means for encoding a plurality of bits using a forward error correction code;

means for generating an FEC codeword comprising a plurality of encoded bits; and

means for concatenating a plurality of copies of the FEC codeword, wherein the concatenating comprises cyclically shifting by two bits at least one concatenated copy of the FEC codeword relative to a previous concatenated copy of the FEC codeword.

107. The means of aspect 106, further comprising means for modulating the plurality of copies of the FEC codewords on at least one OFDM symbol.

108. Means for header decoding comprising:

means for receiving a plurality of encoded bits comprising a plurality of copies of an FEC codeword; and means for decoding at least two of the plurality of copies of the FEC codeword to generate a first plurality of decoded bits, wherein the decoding comprises cyclically shifting by two bits at least one concatenated copy of the FEC codeword relative to a previous concatenated copy of the FEC codeword.

109. Means for header encoding in multicarrier communications comprising:

means for generating an FEC codeword comprising a plurality of coded bits;

means for concatenating a first copy of the FEC codeword with a second copy of the FEC codeword; and

means for cyclically shifting by two bits the second concatenated copy of the FEC codeword relative to the first concatenated copy of the FEC codeword.

110. The means of aspect 109, further comprising means for modulating the coded bits of the first and second copies of the FEC codewords on at least one OFDM symbol.

111. The means of aspect 109, wherein the cyclically shifting results in a first set of bits from the first copy of the FEC codeword being modulated on a first set of preamble subcarriers and a second different set of bits from the second set of bits being modulated on a second set of preamble subcarriers.

112. Means for distributing header information comprising:

means for assigning header information to a plurality of preamble tones; and

means for reassigning the header information to a plurality of non-preamble tones.

113. Means for indexing subcarriers in passband OFDM communications comprising:

means for indexing subcarriers in a first frequency bandwidth; and

means for indexing subcarriers in a second frequency bandwidth, wherein the frequencies of the second bandwidth are a subset of the frequencies in the first bandwidth, wherein the index of all subcarriers in the second bandwidth are the same as the index of subcarriers in the subset of the first bandwidth.

114. A multicarrier communication means comprising:

a first profile with a first indexing of subcarriers;

a second profile with a second indexing of subcarriers, wherein the second profile uses a subset of the frequency bandwidth of the first profile, and

wherein the index of all subcarriers in the second profile are the same as the index of subcarriers in the subset of frequencies of the first profile.

115. Means for transmitting or receiving packets in passband OFDM communications comprising:

means for transmitting or receiving a first packet using a first profile;

means for transmitting or receiving a second packet using a second profile, wherein

the second profile uses a subset of the frequency bandwidth of the first profile, and

wherein the index of all subcarriers in the second profile are the same as the index of subcarriers in the subset of frequencies of the first profile.

116. A passband OFDM communication means capable of transmitting or receiving a first packet using a first profile, and capable of transmitting or receiving a second packet using a second profile wherein:

the second profile uses a subset of the frequency bandwidth of the first profile, and

the index of all subcarriers in the second profile are the same as the index of sub-carriers in the subset of frequencies of the first profile.

117. An OFDM transceiver comprising:

means for transmitting or receiving a packet with a preamble portion, the preamble portion comprising information that can be used to determine a profile of the packet.

118. The means of aspect 117, further wherein the information is indicated using one or more of the following:

a phase of subcarriers in preamble,

an amplitude of subcarriers in the preamble,

subcarrier spacing of subcarriers in the preamble,

a number of subcarriers in the preamble, and

indexes of transmitted subcarriers in the preamble.

119. A header repetition means which constantly changes mapping of sub-carriers within a header block as it is multiplied over the entire bandwidth so that header information is evenly distributed between preamble tones and non-preamble tones by:

circular-shifting, either to the left or the right, of sub-carrier indices within a single header block;

arbitrary tone-interleaving scheme within a single header block which can be different a block from a block; and/or

circular-shifting, either to the left or the right, of the FEC output as each block is mapped to sub-carriers; and/or data scrambling of the FEC output as each block is mapped to sub-carriers.

120. A header repetition means in which the number of sub-carriers corresponding to a single set of header information bits and the ratio of the number of non-preamble tones over the number of preamble tones are co-prime or even-odd pair.

121. A system capable of embedding profile information in a packet preamble comprising:

a preamble generation module that one or more of determines or receives an indication as to a profile to be used for communication of a packet;

a profile embedding module that one or more of encodes or indicates which profile will be used for transmission of the packet, wherein:

the profile information can be indicated based on one or more of:

phase of the subcarriers in the preamble,

amplitude of subcarriers in the preamble,

subcarrier spacing of subcarriers in the preamble,

number of subcarriers in the preamble, and

indexes of transmitted subcarriers in the preamble.

122. The system of aspect 121, further comprising a packet generation module that completes packet generation.

123. The system of aspect 122, further comprising a transmitter module that transmits the completed packet.

124. A system capable of determining a profile used for transmission of a packet comprising:

a profile decoding module that detects one or more of:

phase of subcarriers in a preamble,

amplitude of subcarriers in the preamble,

subcarrier spacing of subcarriers in the preamble,

number of subcarriers in the preamble, and

indexes of transmitted subcarriers in the preamble; and

selects a profile based on the detecting step.

125. The system of aspect 124, wherein a header decoding is bypassed.

126. A packet transmission system comprising:

a preamble generation module capable of selecting one of a first profile and a second profile to be used for transmission of the packet;

if the first profile is to be used, one or more of the following specify, in the preamble, the profile used:

a first value for one or more phases of the subcarriers in the preamble,

a first value for one or more amplitudes of subcarriers in the preamble,

a first value for subcarrier spacing of subcarriers in the preamble,

a first value for a number of subcarriers in the preamble, and

a first set of indexes of transmitted subcarriers in the preamble;

if the second profile is to be used, one or more of the following specify, in the preamble, the profile used:

a second value for one or more phases of the subcarriers in the preamble,

a second value for one or more amplitudes of subcarriers in the preamble,

a second value for a subcarrier spacing of subcarriers in the preamble,

a second value for a number of subcarriers in the preamble, and

a second set of indexes of transmitted subcarriers in the preamble.

127. The system of aspect 126, further comprising a packet generation module that completes packet generation.

128. The system of aspect 127, further comprising a transmitted module that transmits the packet.

129. A packet reception system comprising:

a receiver module capable of receiving a packet that was transmitted with either a first profile or a second profile; and

a profile decoding module capable of detecting one or more of the following values:

a first or second value for one or more phases of the subcarriers in a preamble,

a first or second value for one or more amplitudes of subcarriers in the preamble,

a first or second for subcarrier spacing of subcarriers in the preamble,

a first or second for a number of subcarriers in the preamble, and

a first or second set of indexes of transmitted subcarriers in the preamble.

130. The system of aspect 129, wherein the first values correspond to a first profile and the second values correspond to a second profile.

131. A system capable of indexing subcarriers in passband OFDM communications comprising:

a header encoder capable of that assigning a frequency $F(i_{even})$ to subcarriers with even indices in accordance with:

$$F(i_{even}) = Fc + (i/2) \times Fsc;$$

and

capable of assigning a frequency $F(i_{odd})$ to subcarriers with odd indices in accordance with:

$$F(i_{odd}) = Fc - (i+1)/2 \times Fsc;$$

where Fc = Fuc + Fus, and

wherein i is an index, Fuc is a first frequency value, Fus is a second frequency value and Fsc is third frequency value.

132. The system of aspect 131, wherein the index i can take on values between 0 and N-1, wherein N is an integer.

133. The system of aspect 131, wherein the first frequency Fuc is an up-shift frequency.

134. The system of aspect 131, wherein the second frequency Fus is an up-conversion frequency.

135. The system of aspect 131, wherein the indexing is used for loading data on to subcarriers.

136. The system of aspect 135, wherein the data is header information.

137. The system of aspect 135, wherein the data is payload information.

138. The system of aspect 131, wherein the header encoder further one or more of loads or encodes one or more bits onto subcarriers in an order specified by the indices.

139. A system capable of indexing subcarriers for reception in passband OFDM communications comprising:

a header decoder capable of assigning a frequency $F(i_{even})$ to subcarriers with even indices in accordance with:

$$F(i_{even}) = Fc + (i/2) \times Fsc;$$

and capable of assigning a frequency $F(i_{odd})$ to subcarriers with odd indices in accordance with:

$$F(i_{odd}) = Fc - (i+1)/2 \times Fsc;$$

and

where Fc = Fuc + Fus, and

wherein i is an index, Fuc is a first frequency value and Fus is a second frequency value and Fsc is third frequency value.

140. The system of aspect 139, wherein a plurality of bits from the subcarriers are demodulated in an order determined by the indices.

141. A system capable of indexing subcarriers for transmission in passband OFDM communications comprising:

a header encoder capable of modulating and/or encoding and/or loading bits onto subcarriers in an order specified by a predetermined indexing technique, wherein the predetermined indexing technique specifies that:

a frequency $F(i_{even})$ is assigned to subcarriers with even indices in accordance with:

$$F(i_{even}) = Fc + (i/2) \times Fsc;$$

and, a frequency $F(i_{odd})$ is assigned to subcarriers with odd indices in accordance with:

$$F(i_{odd}) = Fc - (i+1)/2 \times Fsc;$$

where Fc = Fuc + Fus, and wherein i is an index, Fuc is a first frequency value, Fus is a second frequency value and Fsc is third frequency value.

142. A system capable of indexing subcarriers for reception in passband OFDM communications comprising:

a header decoder capable of demodulating and/or decoding a plurality of bits from the subcarriers in an order specified by a predetermined indexing technique, wherein the predetermined indexing technique specifies that:

a frequency $F(i_{even})$ is assigned to subcarriers with even indices in accordance with:

$$F(i_{even}) = Fc + (i/2) \times Fsc;$$

a frequency $F(i_{odd})$ is assigned to subcarriers with odd indices in accordance with:

$$F(i_{odd}) = Fc - (i+1)/2 \times Fsc;$$

where Fc = Fuc + Fus,
wherein i is an index, Fuc is a first frequency value, Fus is a second frequency value and Fsc is third frequency value.

143. A system capable of header encoding comprising:

a FEC encoder capable of encoding a plurality of bits using a forward error correction code and capable of generating an FEC codeword comprising a plurality of encoded bits; and

a header encoder capable of concatenating a first copy of the FEC codeword with a second copy of the FEC codeword, wherein the concatenating comprises cyclically shifting by two bits the second concatenated copy of the FEC codeword relative to the first concatenated copy of the FEC codeword.

144. The system of aspect 143, wherein the encoded bits of the first and second copies of the FEC codewords are modulated on at least one OFDM symbol

145. A system capable of header decoding comprising:

a receiver module capable of receiving a plurality of encoded bits comprising at least two concatenated copies of an FEC codeword;

a FEC decoder module capable of decoding a first copy of the FEC codeword to generate a first plurality of decoded bits, and capable of decoding a second copy of the FEC codeword to generate a second plurality of decoded bits, wherein the decoding comprises cyclically shifting by two bits the second copy of the FEC codeword relative to the first copy of the FEC codeword.

146. A system capable of header encoding comprising:

a FEC encoder module capable of encoding a plurality of bits using a forward error correction code and capable of generating an FEC codeword comprising a plurality of encoded bits; and

a header encoder capable of concatenating a plurality of copies of the FEC codeword, wherein the concatenating comprises cyclically shifting by two bits at least one concatenated copy of the FEC codeword relative to a previous concatenated copy of the FEC codeword.

147. The system of aspect 146, further comprising a modulator module capable of modulating the plurality of copies of the FEC codewords on at least one OFDM symbol.

148. A system capable of header decoding comprising:

a receiver module capable of receiving a plurality of encoded bits comprising a plurality of copies of an FEC codeword; and

a FEC decoder module capable of decoding at least two of the plurality of copies of the FEC codeword to generate a first plurality of decoded bits, wherein the decoding comprises cyclically shifting by two bits at least one concatenated copy of the FEC codeword relative to a previous concatenated copy of the FEC codeword.

149. A system capable of header encoding in multicarrier communications comprising:

a FEC encoder module capable of generating an FEC codeword comprising a plurality of coded bits;

a header encoder capable of concatenating a first copy of the FEC codeword with a second copy of the FEC codeword and capable of cyclically shifts by two bits the second concatenated copy of the FEC codeword relative to the first concatenated copy of the FEC codeword.

150. The system of aspect 149, further comprising a modulator module capable of modulating the coded bits of the first and second copies of the FEC codewords on at least one OFDM symbol.

151. The system of aspect 149, wherein the cyclically shifting results in a first set of bits from the first copy of the FEC codeword being modulated on a first set of preamble subcarriers and a second different set of bits from the second set of bits being modulated on a second set of preamble subcarriers.

152. A system capable of distributing header information comprising:

a header encoder that assigns header information to a plurality of preamble tones;

and reassigns the header information to a plurality of non-preamble tones.

153. A system capable of indexing subcarriers in passband OFDM communications comprising:

a preamble decoding module that indexes subcarriers in a first frequency bandwidth, and indexes subcarriers in a second frequency bandwidth, wherein the frequencies of the second bandwidth are a subset of the frequencies in the first bandwidth, wherein the index of all subcarriers in the second bandwidth are the same as the index of subcarriers in the subset of the first bandwidth.

154. A multicarrier communication transceiver comprising:

a first profile with a first indexing of subcarriers;

a second profile with a second indexing of subcarriers, wherein the second profile uses a subset of the frequency bandwidth of the first profile, and

wherein the index of all subcarriers in the second profile are the same as the index of subcarriers in the subset of frequencies of the first profile.

155. A system capable of transmitting or receiving packets in passband OFDM communications comprising:

a transmitter module or receiver module that transmit or receive, respectively, a first packet using a first profile and transmit or receive a second packet using a second profile, wherein the second profile uses a subset of the frequency bandwidth of the first profile, and

wherein the index of all subcarriers in the second profile are the same as the index of subcarriers in the subset of frequencies of the first profile.

156. A passband OFDM communications system capable of transmitting or receiving a first packet using a first profile, and capable of transmitting or receiving a second packet using a second profile wherein:

the second profile uses a subset of the frequency bandwidth of the first profile, and

the index of all subcarriers in the second profile are the same as the index of subcarriers in the subset of frequencies of the first profile.

157. An OFDM transceiver comprising:

a transmitter module capable of transmitting or receiving a packet with a preamble portion, the preamble portion comprising information that can be used to determine a profile of the packet.

158. The system of aspect 157, further wherein the information is indicated using one or more of the following:

a phase of subcarriers in preamble,

an amplitude of subcarriers in the preamble,

subcarrier spacing of subcarriers in the preamble,

a number of subcarriers in the preamble, and

indexes of transmitted subcarriers in the preamble.

159. A header repetition transceiver capable of constantly changing mapping of sub-carriers within a header block as it is multiplied over the entire bandwidth so that header information is evenly distributed between preamble tones and non-preamble tones by:

circular-shifting, either to the left or the right, of sub-carrier indices within a single header block;

arbitrary tone-interleaving scheme within a single header block which can be different a block from a block; and/or

circular-shifting, either to the left or the right, of the FEC output as each block is mapped to sub-carriers; and/or data scrambling of the FEC output as each block is mapped to sub-carriers.

160. A header repetition transceiver in which the number of sub-carriers corresponding to a single set of header information bits and the ratio of the number of non-preamble tones over the number of preamble tones are capable of being co-prime or even-odd pair.

161. A method for identifying profile information in a packet preamble comprising:

one or more of determining or receiving an indication as to a profile to be used for communication of a packet; one or more of encoding or indicating which profile will be used for transmission of the packet, wherein:

the profile information can be indicated based on one or more of:

phase of the subcarriers in the preamble,

amplitude of subcarriers in the preamble,

subcarrier spacing of subcarriers in the preamble,

number of subcarriers in the preamble, and

indexes of transmitted subcarriers in the preamble; and

detecting one or more of:

the phase of subcarriers in the preamble,

the amplitude of subcarriers in the preamble,

the subcarrier spacing of subcarriers in the preamble,

the number of subcarriers in the preamble, and

the indexes of transmitted subcarriers in the preamble; and

selecting a profile based on the detecting step.

162. The method of aspect 161, further comprising completing packet generation.

163. The method of aspect 161, further comprising transmitting the completed packet.

164. The method of aspect 161, wherein a header decoding is bypassed.

165. A packet communication method comprising:

selecting one of a first profile and a second profile to be used for transmission of the packet;

if the first profile is to be used, one or more of the following specify, in the preamble, the profile used:

a first value for one or more phases of the subcarriers in the preamble,

a first value for one or more amplitudes of subcarriers in the preamble,

a first value for subcarrier spacing of subcarriers in the preamble,

a first value for a number of subcarriers in the preamble, and

a first set of indexes of transmitted subcarriers in the preamble;

if the second profile is to be used, one or more of the following specify, in the preamble, the profile used:

a second value for one or more phases of the subcarriers in the preamble,

a second value for one or more amplitudes of subcarriers in the preamble,

a second value for a subcarrier spacing of subcarriers in the preamble,

a second value for a number of subcarriers in the preamble, and

a second set of indexes of transmitted subcarriers in the preamble;

receiving the packet that was transmitted with either the first profile or the second profile; and

detecting one or more of the following values:

the first or second value for one or more phases of the subcarriers in a preamble,

the first or second value for one or more amplitudes of subcarriers in the preamble,

the first or second for subcarrier spacing of subcarriers in the preamble,

the first or second for a number of subcarriers in the preamble, and

the first or second set of indexes of transmitted subcarriers in the preamble.

166. The method of aspect 165, further comprising completing packet generation.

167. The method of aspect 165, further comprising transmitting the packet.

168. The method of aspect 165, wherein the first values correspond to a first profile and the second values correspond to a second profile.

169. A method of indexing subcarriers in passband OFDM communications comprising:

assigning a frequency $F(i_{even})$ to subcarriers with even indices in accordance with:

$$F(i_{even}) = Fc + (i/2) \times Fsc;$$

and

assigning a frequency $F(i_{odd})$ to subcarriers with odd indices in accordance with:

$$F(i_{odd}) = Fc - (i+1)/2 \times Fsc;$$

where Fc = Fuc + Fus, and

wherein $i$ is an index, Fuc is a first frequency value, Fus is a second frequency value and Fsc is third frequency value; and

indexing the subcarriers for reception including:

assigning a frequency $F(i_{even})$ to subcarriers with even indices in accordance with:

$$F(i_{even}) = Fc + (i/2) \times Fsc;$$

assigning a frequency $F(i_{odd})$ to subcarriers with odd indices in accordance with:

$$F(i_{odd}) = Fc - (i+1)/2 \times Fsc;$$

and

where Fc = Fuc + Fus, and

wherein i is an index, Fuc is a first frequency value and Fus is a second frequency value and Fsc is third frequency value.

170. The method of aspect 169, wherein the index i can take on values between 0 and N-1, wherein N is an integer.

171. The method of aspect 169, wherein the first frequency Fuc is an up-shift frequency.

172. The method of aspect 169, wherein the second frequency Fus is an up-conversion frequency.

173. The method of aspect 169, wherein the indexing is used for loading data on to subcarriers.

174. The method of aspect 173, wherein the data is header information.

175. The method of aspect 173, wherein the data is payload information.

176. The method of aspect 169, further comprising one or more of loading or encoding one or more bits onto subcarriers in an order specified by the indices.

177. The method of aspect 176, wherein a plurality of bits from the subcarriers are demodulated in an order determined by the indices.

178. A method for indexing subcarriers for communications in passband OFDM communications comprising:

modulating and/or encoding and/or loading bits onto subcarriers in an order specified by a predetermined indexing technique, wherein the predetermined indexing technique specifies that:

a frequency $F(i_{even})$ is assigned to subcarriers with even indices in accordance with:

$$F(i_{even}) = Fc + (i/2) \times Fsc;$$

and, a frequency $F(i_{odd})$ is assigned to subcarriers with odd indices in accordance with:

$$F(i_{odd}) = Fc - (i+1)/2 \times Fsc;$$

where Fc = Fuc + Fus, and wherein i is an index, Fuc is a first frequency value, Fus is a second frequency value and Fsc is third frequency value; and

demodulating and/or decoding the plurality of bits from the subcarriers in the order specified by the predetermined indexing technique, wherein the predetermined indexing technique specifies that:

a frequency $F(i_{even})$ is assigned to subcarriers with even indices in accordance with:

$$F(i_{even}) = Fc + (i/2) \times Fsc;$$

a frequency $F(i_{odd})$ is assigned to subcarriers with odd indices in accordance with:

$$F(i_{odd}) = Fc - (i+1)/2 \times Fsc;$$

where Fc = Fuc + Fus,

wherein i is an index, Fuc is a first frequency value, Fus is a second frequency value and Fsc is third frequency value.

179. A method for header encoding and decoding comprising:

encoding a plurality of bits using a forward error correction code;

generating an FEC codeword comprising a plurality of encoded bits;

concatenating a first copy of the FEC codeword with a second copy of the FEC codeword, wherein the concatenating comprises cyclically shifting by two bits the second concatenated copy of the FEC codeword relative to the first concatenated copy of the FEC codeword;

receiving the plurality of encoded bits comprising at least two concatenated copies of an FEC codeword;

decoding the first copy of the FEC codeword to generate a first plurality of decoded bits; and

decoding the second copy of the FEC codeword to generate a second plurality of decoded bits, wherein the decoding comprises cyclically shifting by two bits the second copy of the FEC codeword relative to the first copy of the FEC codeword.

180. The method of aspect 179, wherein the encoded bits of the first and second copies of the FEC codewords are modulated on at least one OFDM symbol

181. A method for header encoding and decoding comprising:

encoding a plurality of bits using a forward error correction code;

generating an FEC codeword comprising a plurality of encoded bits;

concatenating a plurality of copies of the FEC codeword, wherein the concatenating comprises cyclically shifting by two bits at least one concatenated copy of the FEC codeword relative to a previous concatenated copy of the FEC codeword;

receiving the plurality of encoded bits comprising a plurality of copies of an FEC codeword; and

decoding at least two of the plurality of copies of the FEC codeword to generate a first plurality of decoded bits, wherein the decoding comprises cyclically shifting by two bits at least one concatenated copy of the FEC codeword relative to a previous concatenated copy of the FEC codeword.

182. The method of aspect 181, further comprising modulating the plurality of copies of the FEC codewords on at least one OFDM symbol.

183. A method of header encoding and decoding in multicarrier communications comprising:

generating an FEC codeword comprising a plurality of coded bits;

concatenating a first copy of the FEC codeword with a second copy of the FEC codeword;

cyclically shifting by two bits the second concatenated copy of the FEC codeword relative to the first concatenated copy of the FEC codeword; and

receiving the plurality of encoded bits comprising a plurality of copies of an FEC codeword.

184. The method of aspect 183, further comprising modulating the coded bits of the first and second copies of the FEC codewords on at least one OFDM symbol.

185. The method of aspect 183, wherein the cyclically shifting results in a first set of bits from the first copy of the FEC codeword being modulated on a first set of preamble subcarriers and a second different set of bits from the second set of bits being modulated on a second set of preamble subcarriers.

186. A method of transmitting or receiving header information, wherein;

header information is assigned to a plurality of preamble tones; and

the header information is reassigned to a plurality of non-preamble tones.

187. A method of indexing subcarriers for transmission or reception in passband OFDM communications wherein:

subcarriers in a first frequency bandwidth are indexed; and

subcarriers in a second frequency bandwidth are indexed, wherein the frequencies of the second bandwidth are a subset of the frequencies in the first bandwidth, wherein the index of all subcarriers in the second bandwidth are the same as the index of subcarriers in the subset of the first bandwidth.

188. A multicarrier transmission and reception system comprising:

a first profile with a first indexing of subcarriers;

a second profile with a second indexing of subcarriers, wherein the second profile uses a subset of the frequency bandwidth of the first profile, and

wherein the index of all subcarriers in the second profile are the same as the index of subcarriers in the subset of frequencies of the first profile.

189. A method for transmitting or receiving packets in a passband OFDM communications system comprising:

transmitting or receiving a first packet using a first profile;

transmitting or receiving a second packet using a second profile, wherein the second profile uses a subset of the frequency bandwidth of the first profile, and

wherein the index of all subcarriers in the second profile are the same as the index of subcarriers in the subset of frequencies of the first profile.

190. A passband OFDM communications system capable of transmitting or receiving a first packet using a first profile, and capable of transmitting or receiving a second packet using a second profile wherein:

the second profile uses a subset of the frequency bandwidth of the first profile, and

the index of all subcarriers in the second profile are the same as the index of subcarriers in the subset of frequencies of the first profile.

191. In an OFDM communications system, a method comprising:

transmitting or receiving a packet with a preamble portion, the preamble portion comprising information that can be used to determine a profile of the packet.

192. The method of aspect 191, further wherein the information is indicated using one or more of the following:

a phase of subcarriers in preamble,

an amplitude of subcarriers in the preamble,

subcarrier spacing of subcarriers in the preamble,

a number of subcarriers in the preamble, and

indexes of transmitted subcarriers in the preamble.

193. A header repetition method which constantly changes mapping of sub-carriers within a header block as it is multiplied over the entire bandwidth so that header information is evenly distributed between preamble tones and non-preamble tones by:

circular-shifting, either to the left or the right, of sub-carrier indices within a single header block;

arbitrary tone-interleaving scheme within a single header block which can be different a block from a block; and/or

circular-shifting, either to the left or the right, of the FEC output as each block is mapped to sub-carriers; and/or data scrambling of the FEC output as each block is mapped to sub-carriers.

194. A header repetition method in which the number of sub-carriers corresponding to a single set of header information bits and the ratio of the number of non-preamble tones over the number of preamble tones are co-prime or even-odd pair.

195. A computer-readable storage media having instructions stored thereon that if executed are for identifying profile information in a packet preamble comprising:

information that one or more of determines or receives an indication as to a profile to be used for communication of a packet;

information that one or more of encodes or indicates which profile will be used for transmission of the packet, wherein:

the profile information can be indicated based on one or more of:

phase of the subcarriers in the preamble,

amplitude of subcarriers in the preamble,

subcarrier spacing of subcarriers in the preamble,

number of subcarriers in the preamble, and

indexes of transmitted subcarriers in the preamble; and

detecting one or more of:

the phase of subcarriers in the preamble,

the amplitude of subcarriers in the preamble,

the subcarrier spacing of subcarriers in the preamble,

the number of subcarriers in the preamble, and

the indexes of transmitted subcarriers in the preamble; and

information that selects a profile based on the detecting step.

196. The media of aspect 195, further comprising completing packet generation.

197. The media of aspect 195, further comprising transmitting the completed packet.

198. The media of aspect 195, wherein a header decoding is bypassed.

199. A computer-readable storage media having instructions stored thereon that if executed are for packet communication comprising:

information that selects one of a first profile and a second profile to be used for transmission of the packet;

if the first profile is to be used, one or more of the following specify, in the preamble, the profile used:

a first value for one or more phases of the subcarriers in the preamble,

a first value for one or more amplitudes of subcarriers in the preamble,

a first value for subcarrier spacing of subcarriers in the preamble,

a first value for a number of subcarriers in the preamble, and

a first set of indexes of transmitted subcarriers in the preamble;

if the second profile is to be used, one or more of the following specify, in the preamble, the profile used:

a second value for one or more phases of the subcarriers in the preamble,

a second value for one or more amplitudes of subcarriers in the preamble,

a second value for a subcarrier spacing of subcarriers in the preamble,

a second value for a number of subcarriers in the preamble, and

a second set of indexes of transmitted subcarriers in the preamble;

information that receives the packet that was transmitted with either the first profile or the second profile; and

information that detects one or more of the following values:

the first or second value for one or more phases of the subcarriers in a preamble,

the first or second value for one or more amplitudes of subcarriers in the preamble,

the first or second for subcarrier spacing of subcarriers in the preamble,

the first or second for a number of subcarriers in the preamble, and

the first or second set of indexes of transmitted subcarriers in the preamble.

200. The media of aspect 199, further comprising completing packet generation.

201. The media of aspect 199, further comprising transmitting the packet.

202. The media of aspect 201, wherein the first values correspond to a first profile and the second values correspond to a second profile.

203. A computer-readable storage media having instructions stored thereon that if executed are for indexing subcarriers in passband OFDM communications comprising:

information that assigns a frequency $F(i_{even})$ to subcarriers with even indices in accordance with:

$$F(i_{even}) = Fc + (i/2) \times Fsc;$$

and

information that assigns a frequency $F(i_{odd})$ to subcarriers with odd indices in accordance with:

$$F(i_{odd}) = Fc - (i+1)/2 \times Fsc;$$

where Fc = Fuc + Fus, and

wherein $i$ is an index, Fuc is a first frequency value, Fus is a second frequency value and Fsc is third frequency value; and

information that indexes the subcarriers for reception including:

information that assigns a frequency $F(i_{even})$ to subcarriers with even indices in accordance with:

44

$$F(i_{even}) = Fc + (i/2) \times Fsc;$$

information that assigns a frequency $F(i_{odd})$ to subcarriers with odd indices in accordance with:

$$F(i_{odd}) = Fc - (i+1)/2 \times Fsc;$$

and

where Fc = Fuc + Fus, and

wherein i is an index, Fuc is a first frequency value and Fus is a second frequency value and Fsc is third frequency value.

204. The media of aspect 203, wherein the index i can take on values between 0 and N-1, wherein N is an integer.

205. The media of aspect 203, wherein the first frequency Fuc is an up-shift frequency.

206. The media of aspect 203, wherein the second frequency Fus is an up-conversion frequency.

207. The media of aspect 203, wherein the indexing is used for loading data on to subcarriers.

208. The media of aspect 207, wherein the data is header information.

209. The media of aspect 207, wherein the data is payload information.

210. The media of aspect 203, further comprising information that one or more of loads or encodes one or more bits onto subcarriers in an order specified by the indices.

211. The media of aspect 201, wherein a plurality of bits from the subcarriers are demodulated in an order determined by the indices.

212. A computer-readable storage media having instructions stored thereon that if executed are for indexing subcarriers for communications in passband OFDM communications comprising:

information that modulates and/or encodes and/or loads bits onto subcarriers in an order specified by a predetermined indexing technique, wherein the predetermined indexing technique specifies that:

a frequency $F(i_{even})$ is assigned to subcarriers with even indices in accordance with:

$$F(i_{even}) = Fc + (i/2) \times Fsc;$$

and,

a frequency $F(i_{odd})$ is assigned to subcarriers with odd indices in accordance with:

$$F(i_{odd}) = Fc - (i+1)/2 \times Fsc;$$

where Fc = Fuc + Fus, and wherein i is an index, Fuc is a first frequency value, Fus is a second frequency value and Fsc is third frequency value; and

information that demodulates and/or decodes the plurality of bits from the subcarriers in the order specified by the predetermined indexing technique, wherein the predetermined indexing technique specifies that:

a frequency $F(i_{even})$ is assigned to subcarriers with even indices in accordance with:

$$F(i_{even}) = Fc + (i/2) \times Fsc;$$

a frequency $F(i_{odd})$ is assigned to subcarriers with odd indices in accordance with:

$$F(i_{odd}) = Fc - (i+1)/2 \times Fsc;$$

where Fc = Fuc + Fus,

wherein i is an index, Fuc is a first frequency value, Fus is a second frequency value and Fsc is third frequency value.

213. A computer-readable storage media having instructions stored thereon that if executed are for header encoding and decoding comprising:

information that encodes a plurality of bits using a forward error correction code;

information that generates an FEC codeword comprising a plurality of encoded bits;

information that concatenates a first copy of the FEC codeword with a second copy of the FEC codeword, wherein the concatenating comprises cyclically shifting by

two bits the second concatenated copy of the FEC codeword relative to the first concatenated copy of the FEC codeword;

information that receives the plurality of encoded bits comprising at least two concatenated copies of an FEC codeword;

information that decodes the first copy of the FEC codeword to generate a first plurality of decoded bits; and

information that decodes the second copy of the FEC codeword to generate a second plurality of decoded bits, wherein the decoding comprises cyclically shifting by two bits the second copy of the FEC codeword relative to the first copy of the FEC codeword.

214. The media of aspect 213, wherein the encoded bits of the first and second copies of the FEC codewords are modulated on at least one OFDM symbol

215. A computer-readable storage media having instructions stored thereon that if executed are for header encoding and decoding comprising:

information that encodes a plurality of bits using a forward error correction code;

information that generates an FEC codeword comprising a plurality of encoded bits; and

information that concatenates a plurality of copies of the FEC codeword, wherein the concatenating comprises cyclically shifting by two bits at least one concatenated copy of the FEC codeword relative to a previous concatenated copy of the FEC codeword;

information that receives the plurality of encoded bits comprising a plurality of copies of an FEC codeword; and

information that decodes at least two of the plurality of copies of the FEC codeword to generate a first plurality of decoded bits, wherein the decoding comprises cyclically shifting by two bits at least one concatenated copy of the FEC codeword relative to a previous concatenated copy of the FEC codeword.

216. The media of aspect 215, further comprising modulating the plurality of copies of the FEC codewords on at least one OFDM symbol.

217. A computer-readable storage media having instructions stored thereon that if executed are for header encoding and decoding in multicarrier communications comprising:

information that generates an FEC codeword comprising a plurality of coded bits;

information that concatenates a first copy of the FEC codeword with a second copy of the FEC codeword;

information that cyclically shifts by two bits the second concatenated copy of the FEC codeword relative to the first concatenated copy of the FEC codeword; and

information that receives the plurality of encoded bits comprising a plurality of copies of an FEC codeword.

218. The media of aspect 217, further comprising modulating the coded bits of the first and second copies of the FEC codewords on at least one OFDM symbol.

219. The media of aspect 217, wherein the cyclically shifting results in a first set of bits from the first copy of the FEC codeword being modulated on a first set of preamble subcarriers and a second different set of bits from the second set of bits being modulated on a second set of preamble subcarriers.

220. A computer-readable storage media having instructions stored thereon that if executed are for transmitting or receiving header information, wherein:

header information is assigned to a plurality of preamble tones; and

the header information is reassigned to a plurality of non-preamble tones.

221. A computer-readable storage media having instructions stored thereon that if executed are for indexing subcarriers for transmission or reception in passband OFDM communications wherein:

subcarriers in a first frequency bandwidth are indexed; and

subcarriers in a second frequency bandwidth are indexed, wherein the frequencies of the second bandwidth are a subset of the frequencies in the first bandwidth, wherein the index of all subcarriers in the second bandwidth are the same as the index of subcarriers in the subset of the first bandwidth.

222. A computer-readable storage media having instructions stored thereon that if executed are for multicarrier transmission and reception system comprising:

a first profile with a first indexing of subcarriers;

a second profile with a second indexing of subcarriers, wherein the second profile uses a subset of the frequency bandwidth of the first profile, and

wherein the index of all subcarriers in the second profile are the same as the index of subcarriers in the subset of frequencies of the first profile.

223. A computer-readable storage media having instructions stored thereon that if executed are for transmitting or receiving packets in a passband OFDM communications system comprising:

transmitting or receiving a first packet using a first profile;

transmitting or receiving a second packet using a second profile, wherein the second profile uses a subset of the frequency bandwidth of the first profile, and

wherein the index of all subcarriers in the second profile are the same as the index of subcarriers in the subset of frequencies of the first profile.

224. A computer-readable storage media having instructions stored thereon that if executed are for passband OFDM communications capable of transmitting or receiving a first packet using a first profile, and capable of transmitting or receiving a second packet using a second profile wherein:

the second profile uses a subset of the frequency bandwidth of the first profile, and

the index of all subcarriers in the second profile are the same as the index of subcarriers in the subset of frequencies of the first profile.

225. A computer-readable storage media having instructions stored thereon that if executed are for OFDM communications comprising:

information that transmits or receives a packet with a preamble portion, the preamble portion comprising information that can be used to determine a profile of the packet.

226. The media of aspect 225, further wherein the information is indicated using one or more of the following:

a phase of subcarriers in preamble,

an amplitude of subcarriers in the preamble,

subcarrier spacing of subcarriers in the preamble,

a number of subcarriers in the preamble, and

indexes of transmitted subcarriers in the preamble.

227. A computer-readable storage media having instructions stored thereon that if executed are for a header repetition technique which constantly changes mapping of sub-carriers within a header block as it is multiplied over the entire bandwidth so that header information is evenly distributed between preamble tones and non-preamble tones by:

circular-shifting, either to the left or the right, of sub-carrier indices within a single header block;

arbitrary tone-interleaving scheme within a single header block which can be different a block from a block; and/or

circular-shifting, either to the left or the right, of the FEC output as each block is mapped to sub-carriers; and/or

data scrambling of the FEC output as each block is mapped to sub-carriers.

228. A computer-readable storage media having instructions stored thereon that if executed are for a header repetition technique in which the number of sub-carriers corresponding to a single set of header information bits and the ratio of the number of non-preamble tones over the number of preamble tones are co-prime or even-odd pair.

229. A system for identifying profile information in a packet preamble comprising:

means for one or more of determining or receiving an indication as to a profile to be used for communication of a packet;

means for one or more of encoding or indicating which profile will be used for transmission of the packet, wherein:

the profile information can be indicated based on one or more of:

phase of the subcarriers in the preamble,

amplitude of subcarriers in the preamble,

subcarrier spacing of subcarriers in the preamble,

number of subcarriers in the preamble, and

indexes of transmitted subcarriers in the preamble; and

means for detecting one or more of:

the phase of subcarriers in the preamble,

the amplitude of subcarriers in the preamble,

the subcarrier spacing of subcarriers in the preamble,

the number of subcarriers in the preamble, and

the indexes of transmitted subcarriers in the preamble; and

means for selecting a profile based on the detecting step.

230. The system of aspect 229, further comprising completing packet generation.

231. The system of aspect 229, further comprising transmitting the completed packet.

232. The system of aspect 229, wherein a header decoding is bypassed.

233. A packet communication system comprising:

means for selecting one of a first profile and a second profile to be used for transmission of the packet;

if the first profile is to be used, one or more of the following specify, in the preamble, the profile used:

a first value for one or more phases of the subcarriers in the preamble,

a first value for one or more amplitudes of subcarriers in the preamble,

a first value for subcarrier spacing of subcarriers in the preamble,

a first value for a number of subcarriers in the preamble, and

a first set of indexes of transmitted subcarriers in the preamble;

if the second profile is to be used, one or more of the following specify, in the preamble, the profile used:

a second value for one or more phases of the subcarriers in the preamble,

a second value for one or more amplitudes of subcarriers in the preamble,

a second value for a subcarrier spacing of subcarriers in the preamble,

a second value for a number of subcarriers in the preamble, and

a second set of indexes of transmitted subcarriers in the preamble;

means for receiving the packet that was transmitted with either the first profile

or the second profile; and

means for detecting one or more of the following values:

the first or second value for one or more phases of the subcarriers in a preamble,

the first or second value for one or more amplitudes of subcarriers in the preamble,

the first or second for subcarrier spacing of subcarriers in the preamble,

the first or second for a number of subcarriers in the preamble, and

the first or second set of indexes of transmitted subcarriers in the preamble.

234. The system of aspect 233, further comprising completing packet generation.

235. The system of aspect 233, further comprising transmitting the packet.

236. The system of aspect 233, wherein the first values correspond to a first profile and the second values correspond to a second profile.

237. A system for indexing subcarriers in passband OFDM communications comprising:

means for assigning a frequency $F(i_{even})$ to subcarriers with even indices in accordance with:

$$F(i_{even}) = Fc + (i/2) \times Fsc;$$

and

means for assigning a frequency $F(i_{odd})$ to subcarriers with odd indices in accordance with:

$$F(i_{odd}) = Fc - (i+1)/2 \times Fsc;$$

where Fc = Fuc + Fus, and

wherein i is an index, Fuc is a first frequency value, Fus is a second frequency value and Fsc is third frequency value; and

means for indexing the subcarriers for reception including:

means for assigning a frequency $F(i_{even})$ to subcarriers with even indices in accordance with:

$$F(i_{even}) = Fc + (i/2) \times Fsc;$$

means for assigning a frequency $F(i_{odd})$ to subcarriers with odd indices in accordance with:

$$F(i_{odd}) = Fc - (i+1)/2 \times Fsc;$$

and

where Fc = Fuc + Fus, and

wherein i is an index, Fuc is a first frequency value and Fus is a second frequency value and Fsc is third frequency value.

238. The system of aspect 237, wherein the index i can take on values between 0 and N-1, wherein N is an integer.

239. The system of aspect 237, wherein the first frequency Fuc is an up-shift frequency.

240. The system of aspect 237, wherein the second frequency Fus is an up-conversion frequency.

241. The system of aspect 237 wherein the indexing is used for loading data on to subcarriers.

242. The system of aspect 241, wherein the data is header information.

243. The system of aspect 241, wherein the data is payload information.

244. The system of aspect 237, further comprising one or more of loading or encoding one or more bits onto subcarriers in an order specified by the indices

245. The system of aspect 244, wherein a plurality of bits from the subcarriers are demodulated in an order determined by the indices.

246. A system for indexing subcarriers for communications in passband OFDM communications comprising:

means for modulating and/or encoding and/or loading bits onto subcarriers in an order specified by a predetermined indexing technique, wherein the predetermined indexing technique specifies that:

a frequency $F(i_{even})$ is assigned to subcarriers with even indices in accordance with:

$$F(i_{even}) = Fc + (i/2) \times Fsc;$$

and,

a frequency $F(i_{odd})$ is assigned to subcarriers with odd indices in accordance with:

$$F(i_{odd}) = Fc - (i+1)/2 \times Fsc;$$

where Fc = Fuc + Fus, and wherein i is an index, Fuc is a first frequency value, Fus is a second frequency value and Fsc is third frequency value; and

means for demodulating and/or decoding the plurality of bits from the subcarriers in the order specified by the predetermined indexing technique, wherein the predetermined indexing technique specifies that:

a frequency $F(i_{even})$ is assigned to subcarriers with even indices in accordance with:

$$F(i_{even}) = Fc + (i/2) \times Fsc;$$

a frequency $F(i_{odd})$ is assigned to subcarriers with odd indices in accordance with:

$$F(i_{odd}) = Fc - (i+1)/2 \times Fsc;$$

where Fc = Fuc + Fus,

wherein i is an index, Fuc is a first frequency value, Fus is a second frequency value and Fsc is third frequency value.

247. A system for header encoding and decoding comprising:

means for encoding a plurality of bits using a forward error correction code;

means for generating an FEC codeword comprising a plurality of encoded bits;

means for concatenating a first copy of the FEC codeword with a second copy of the FEC codeword, wherein the concatenating comprises cyclically shifting by two bits the second concatenated copy of the FEC codeword relative to the first concatenated copy of the FEC codeword;

means for receiving the plurality of encoded bits comprising at least two concatenated copies of an FEC codeword;

means for decoding the first copy of the FEC codeword to generate a first plurality of decoded bits; and

means for decoding the second copy of the FEC codeword to generate a second plurality of decoded bits, wherein the decoding comprises cyclically shifting by two bits the second copy of the FEC codeword relative to the first copy of the FEC codeword.

248. The system of aspect 247, wherein the encoded bits of the first and second copies of the FEC codewords are modulated on at least one OFDM symbol

249. A system for header encoding and decoding comprising:

means for means for encoding a plurality of bits using a forward error correction code;

means for generating an FEC codeword comprising a plurality of encoded bits;

means for concatenating a plurality of copies of the FEC codeword, wherein the concatenating comprises cyclically shifting by two bits at least one concatenated copy of the FEC codeword relative to a previous concatenated copy of the FEC codeword;

means for receiving the plurality of encoded bits comprising a plurality of copies of an FEC codeword; and

means for decoding at least two of the plurality of copies of the FEC codeword to generate a first plurality of decoded bits, wherein the decoding comprises cyclically shifting by two bits at least one concatenated copy of the FEC codeword relative to a previous concatenated copy of the FEC codeword.

250. The system of aspect 249, further comprising modulating the plurality of copies of the FEC codewords on at least one OFDM symbol.

251. A system for header encoding and decoding in multicarrier communications comprising:

means for generating an FEC codeword comprising a plurality of coded bits;

means for concatenating a first copy of the FEC codeword with a second copy of the FEC codeword;

means for cyclically shifting by two bits the second concatenated copy of the FEC codeword relative to the first concatenated copy of the FEC codeword; and

means for receiving the plurality of encoded bits comprising a plurality of copies of an FEC codeword.

252. The system of aspect 251, further comprising modulating the coded bits of the first and second copies of the FEC codewords on at least one OFDM symbol.

253. The system of aspect 251, wherein the cyclically shifting results in a first set of bits from the first copy of the FEC codeword being modulated on a first set of preamble subcarriers and a second different set of bits from the second set of bits being modulated on a second set of preamble subcarriers.

254. One or more means for transmitting or receiving header information, wherein:

header information is assigned to a plurality of preamble tones; and

the header information is reassigned to a plurality of non-preamble tones.

255. One or more means for indexing subcarriers for transmission or reception in passband OFDM communications wherein:

subcarriers in a first frequency bandwidth are indexed; and

subcarriers in a second frequency bandwidth are indexed, wherein the frequencies of the second bandwidth are a subset of the frequencies in the first bandwidth, wherein the index of all subcarriers in the second bandwidth are the same as the index of subcarriers in the subset of the first bandwidth.

256. A multicarrier transmission and reception means comprising:

a first profile with a first indexing of subcarriers;

a second profile with a second indexing of subcarriers, wherein the second profile uses a subset of the frequency bandwidth of the first profile, and

wherein the index of all subcarriers in the second profile are the same as the index of subcarriers in the subset of frequencies of the first profile.

257. A system for transmitting or receiving packets in a passband OFDM communications system comprising:

means for transmitting or receiving a first packet using a first profile;

means for transmitting or receiving a second packet using a second profile, wherein the second profile uses a subset of the frequency bandwidth of the first profile, and

wherein the index of all subcarriers in the second profile are the same as the index of subcarriers in the subset of frequencies of the first profile.

258. A passband OFDM communications system including one or more means capable of transmitting or receiving a first packet using a first profile, and capable of transmitting or receiving a second packet using a second profile wherein:

the second profile uses a subset of the frequency bandwidth of the first profile, and

the index of all subcarriers in the second profile are the same as the index of subcarriers in the subset of frequencies of the first profile.

259. In an OFDM communications system, a method comprising:

means for transmitting or receiving a packet with a preamble portion, the preamble portion comprising information that can be used to determine a profile of the packet.

260. The system of aspect 259, further wherein the information is indicated using one or more of the following:

a phase of subcarriers in preamble,

an amplitude of subcarriers in the preamble,

subcarrier spacing of subcarriers in the preamble,

a number of subcarriers in the preamble, and

indexes of transmitted subcarriers in the preamble.

261. A header repetition system including one or more means which are capable of constantly changing mapping of sub-carriers within a header block as it is multiplied over the entire bandwidth so that header information is evenly distributed between preamble tones and non-preamble tones by:

circular-shifting, either to the left or the right, of sub-carrier indices within a single header block;

arbitrary tone-interleaving scheme within a single header block which can be different a block from a block; and/or

circular-shifting, either to the left or the right, of the FEC output as each block is mapped to sub-carriers; and/or data scrambling of the FEC output as each block is mapped to sub-carriers.

262. A header repetition system, including one or more means, in which the number of sub-carriers corresponding to a single set of header information bits and the ratio of the number of non-preamble tones over the number of preamble tones are co-prime or even-odd pair.

263. A system for identifying profile information in a packet preamble comprising:

a preamble generation module capable of one or more of determining or receiving an indication as to a profile to be used for communication of a packet;

a profile embedding module capable of one or more of encoding or indicating which profile will be used for transmission of the packet, wherein:

the profile information can be indicated based on one or more of:

phase of the subcarriers in the preamble,

amplitude of subcarriers in the preamble,

subcarrier spacing of subcarriers in the preamble,

number of subcarriers in the preamble, and

indexes of transmitted subcarriers in the preamble; and

a profile decoding module capable of detecting one or more of:

the phase of subcarriers in the preamble,

the amplitude of subcarriers in the preamble,

the subcarrier spacing of subcarriers in the preamble,

the number of subcarriers in the preamble, and

the indexes of transmitted subcarriers in the preamble; and

selecting a profile based on the detecting step.

264. The system of aspect 263, further comprising completing packet generation.

265. The system of aspect 263, further comprising transmitting the completed packet.

266. The system of aspect 263, wherein a header decoding is bypassed.

267. A packet communication system comprising:

a preamble generation module capable of selecting one of a first profile and a second profile to be used for transmission of the packet;

if the first profile is to be used, one or more of the following specify, in the preamble, the profile used:

a first value for one or more phases of the subcarriers in the preamble,

a first value for one or more amplitudes of subcarriers in the preamble,

a first value for subcarrier spacing of subcarriers in the preamble,

a first value for a number of subcarriers in the preamble, and

a first set of indexes of transmitted subcarriers in the preamble;

if the second profile is to be used, one or more of the following specify, in the preamble, the profile used:

a second value for one or more phases of the subcarriers in the preamble,

a second value for one or more amplitudes of subcarriers in the preamble,

a second value for a subcarrier spacing of subcarriers in the preamble,

a second value for a number of subcarriers in the preamble, and

a second set of indexes of transmitted subcarriers in the preamble;

a receiver module capable of receiving the packet that was transmitted with either the first profile or the second profile; and

a profile decoding module capable of detecting one or more of the following values:

the first or second value for one or more phases of the subcarriers in a preamble,

the first or second value for one or more amplitudes of subcarriers in the preamble,

the first or second for subcarrier spacing of subcarriers in the preamble,

the first or second for a number of subcarriers in the preamble, and

the first or second set of indexes of transmitted subcarriers in the preamble.

268. The system of aspect 267, further comprising completing packet generation.

269. The system of aspect 267, further comprising transmitting the packet.

270. The system of aspect 267, wherein the first values correspond to a first profile and the second values correspond to a second profile.

271. A system for indexing subcarriers in passband OFDM communications comprising:

a header encoder capable of assigning a frequency $F(i_{even})$ to subcarriers with even indices in accordance with:

$$F(i_{even}) = Fc + (i/2) \times Fsc;$$

and
capable of assigning a frequency $F(i_{odd})$ to subcarriers with odd indices in accordance with:

$$F(i_{odd}) = Fc - (i+1)/2 \times Fsc;$$

where Fc = Fuc + Fus, and

wherein $i$ is an index, Fuc is a first frequency value, Fus is a second frequency value and Fsc is third frequency value; and

indexing the subcarriers for reception including:

a header decoder capable of assigning a frequency $F(i_{even})$ to subcarriers with even indices in accordance with:

$$F(i_{even}) = Fc + (i/2) \times Fsc;$$

capable of assigning a frequency $F(i_{odd})$ to subcarriers with odd indices in accordance with:

$$F(i_{odd}) = Fc - (i+1)/2 \times Fsc;$$

and

where Fc = Fuc + Fus, and

wherein i is an index, Fuc is a first frequency value and Fus is a second frequency value and Fsc is third frequency value.

272. The system of aspect 271, wherein the index i can take on values between 0 and N-1, wherein N is an integer.

273. The system of aspect 271, wherein the first frequency Fuc is an up-shift frequency.

274. The system of aspect 271, wherein the second frequency Fus is an up-conversion frequency.

275. The system of aspect 271, wherein the indexing is used for loading data on to subcarriers.

276. The system of aspect 275, wherein the data is header information.

277. The system of aspect 275, wherein the data is payload information.

278. The system of aspect 271, further comprising one or more of loading or encoding one or more bits onto subcarriers in an order specified by the indices.

279. The system of aspect 278, wherein a plurality of bits from the subcarriers are demodulated in an order determined by the indices.

280. A system for indexing subcarriers for communications in passband OFDM communications comprising:

a header encoder capable of modulating and/or encoding and/or loading bits onto subcarriers in an order specified by a predetermined indexing technique, wherein
the predetermined indexing technique specifies that:

a frequency $F(i_{even})$ is assigned to subcarriers with even indices in accordance with:

$$F(i_{even}) = Fc + (i/2) \times Fsc;$$

and,

a frequency $F(i_{odd})$ is assigned to subcarriers with odd indices in accordance with:

$$F(i_{odd}) = Fc - (i+1)/2 \times Fsc;$$

where Fc = Fuc + Fus, and wherein i is an index, Fuc is a first frequency value, Fus is a second frequency value and Fsc is third frequency value; and

a header decoder capable of demodulating and/or decoding the plurality of bits from the subcarriers in the order specified by the predetermined indexing technique, wherein the predetermined indexing technique specifies that:

a frequency $F(i_{even})$ is assigned to subcarriers with even indices in accordance with:

$$F(i_{even}) = Fc + (i/2) \times Fsc;$$

a frequency $F(i_{odd})$ is assigned to subcarriers with odd indices in accordance with:

$$F(i_{odd}) = Fc - (i+1)/2 \times Fsc;$$

where Fc = Fuc + Fus,

wherein i is an index, Fuc is a first frequency value, Fus is a second frequency value and Fsc is third frequency value.

281. A system for header encoding and decoding comprising:

a FEC encoder capable of encoding a plurality of bits using a forward error correction code and capable of generating an FEC codeword comprising a plurality of encoded bits;

a header encoder capable of concatenating a first copy of the FEC codeword with a second copy of the FEC codeword, wherein the concatenating comprises cyclically shifting by two bits the second concatenated copy of the FEC codeword relative to the first concatenated copy of the FEC codeword;

a receiver module capable of receiving the plurality of encoded bits comprising at least two concatenated copies of an FEC codeword;

a FEC decoder module capable of decoding the first copy of the FEC codeword to generate a first plurality of decoded bits and capable of decoding the second copy of the FEC codeword to generate a second plurality of decoded bits, wherein the decoding comprises cyclically shifting by two bits the second copy of the FEC codeword relative to the first copy of the FEC codeword.

282. The system of aspect 281, wherein the encoded bits of the first and second copies of the FEC codewords are modulated on at least one OFDM symbol

283. A system for header encoding and decoding comprising:

a FEC encoder module capable of encoding a plurality of bits using a forward error correction code and capable of generating an FEC codeword comprising a plurality of encoded bits;

a header encoder capable of concatenating a plurality of copies of the FEC codeword, wherein the concatenating comprises cyclically shifting by two bits at least one concatenated copy of the FEC codeword relative to a previous concatenated copy of the FEC codeword;

a receiver module capable of receiving the plurality of encoded bits comprising a plurality of copies of an FEC codeword; and

a FEC decoder module capable of decoding at least two of the plurality of copies of the FEC codeword to generate a first plurality of decoded bits, wherein the decoding comprises cyclically shifting by two bits at least one concatenated copy of the FEC codeword relative to a previous concatenated copy of the FEC codeword.

284. The system of aspect 283, further comprising a modulator capable of modulating the plurality of copies of the FEC codewords on at least one OFDM symbol.

285. A method of header encoding and decoding in multicarrier communications comprising:

a FEC encoder module capable of generating an FEC codeword comprising a plurality of coded bits;

a header encoder capable of concatenating a first copy of the FEC codeword with a second copy of the FEC codeword and capable of cyclically shifting by two bits the second concatenated copy of the FEC codeword relative to the first concatenated copy of the FEC codeword; and

a receiver module capable of receiving the plurality of encoded bits comprising a plurality of copies of an FEC codeword .

286. The system of aspect 285, further comprising modulating the coded bits of the first and second copies of the FEC codewords on at least one OFDM symbol.

287. The system of aspect 285, wherein the cyclically shifting results in a first set of bits from the first copy of the FEC codeword being modulated on a first set of preamble subcarriers and a second different set of bits from the second set of bits being modulated on a second set of preamble subcarriers.

288. A method of transmitting or receiving header information, wherein:

header information is assigned to a plurality of preamble tones; and

the header information is reassigned to a plurality of non-preamble tones.

289. A system capable of indexing subcarriers for transmission or reception in passband OFDM communications wherein:

subcarriers in a first frequency bandwidth are indexed; and

subcarriers in a second frequency bandwidth are indexed, wherein the frequencies of the second bandwidth are a subset of the frequencies in the first bandwidth, wherein the index of all subcarriers in the second bandwidth are the same as the index of subcarriers in the subset of the first bandwidth.

290. A multicarrier system capable of transmission and reception comprising:

a first profile with a first indexing of subcarriers;

a second profile with a second indexing of subcarriers, wherein the second profile uses a subset of the frequency bandwidth of the first profile, and

wherein the index of all subcarriers in the second profile are the same as the index of subcarriers in the subset of frequencies of the first profile.

291. A system capable of transmitting or receiving packets in a passband OFDM communications system comprising:

a transmitter module capable of transmitting or a receiver module capable of receiving a first packet using a first profile and capable of transmitting or capable of receiving a second packet using a second profile, wherein the second profile uses a subset of the frequency bandwidth of the first profile, and

wherein the index of all subcarriers in the second profile are the same as the index of subcarriers in the subset of frequencies of the first profile.

292. A passband OFDM communications system capable of transmitting by a transmitter module or receiving by a receiver module a first packet using a first profile, and capable of transmitting by the transmitter module or receiving by the receiver module a second packet using a second profile wherein:

the second profile uses a subset of the frequency bandwidth of the first profile, and

the index of all subcarriers in the second profile are the same as the index of sub-carriers in the subset of frequencies of the first profile.

293. In an OFDM communications system comprising:

a transmitter module capable of transmitting or a receiver module capable of receiving a packet with a preamble portion, the preamble portion comprising information that can be used to determine a profile of the packet.

294. The system of aspect 293, further wherein the information is indicated using one or more of the following:

a phase of subcarriers in preamble,

an amplitude of subcarriers in the preamble,

subcarrier spacing of subcarriers in the preamble,

a number of subcarriers in the preamble, and

indexes of transmitted subcarriers in the preamble.

295. A header repetition system capable of constantly changing mapping of sub-carriers within a header block as it is multiplied over the entire bandwidth so that header information is evenly distributed between preamble tones and non-preamble tones by:

circular-shifting, either to the left or the right, of sub-carrier indices within a single header block;

arbitrary tone-interleaving scheme within a single header block which can be different a block from a block; and/or

circular-shifting, either to the left or the right, of the FEC output as each block is mapped to sub-carriers; and/or data scrambling of the FEC output as each block is mapped to sub-carriers.

296. A header repetition system in which the number of sub-carriers corresponding to a single set of header information bits and the ratio of the number of non-preamble tones over the number of preamble tones are co-prime or even-odd pair.

297. One or more means for performing any one or more aspects of the invention as described herein.

298. One or more of the aspects of the invention as substantially described herein.

299. One or more modules for performing any one or more aspects of the invention as described herein.

300. A communications protocol operated in accordance with any one or more of the above method aspects.

301. Any one or more of the above aspects that include fsc, wherein the third frequency fsc is a subcarrier spacing.

302. A method of transmission in a passband OFDM transceiver comprising:

modulating and/or encoding and/or loading a sequence of bits onto subcarriers in a predetermined order wherein the predetermined order comprises first modulating and/or encoding and/or loading bits from the sequence of bits to a subcarrier with a frequency value that is greater than a center frequency value and second modulating and/or encoding and/or loading bits from the sequence of bits to a subcarrier with a frequency value that is less than the center frequency value.

303. The method of aspect 302, wherein the subcarrier frequency value that is greater than the center frequency value is Fc + n×Fsc and wherein the subcarrier frequency value that is less than the center frequency is Fc - n×Fsc, wherein Fc is the value of center frequency in Hz and, Fsc is a value for subcarrier spacing in Hz, and n is an integer.

304. A method of transmission in a passband OFDM transceiver comprising:

modulating and/or encoding and/or loading a sequence of bits onto subcarriers in a predetermined order wherein the predetermined order comprises alternating between modulating and/or encoding and/or loading bits onto subcarrier frequencies that are greater than a center frequency and modulating and/or encoding and/or loading bits onto subcarrier frequencies that are less than the center frequency.

305. A method of reception in a passband OFDM transceiver comprising:

decoding and/or demodulating a sequence of bits from subcarriers in an predetermined order, wherein the predetermined order comprises first decoding and/or demodulating bits from the sequence of bits from a subcarrier with a frequency value that is greater than a center frequency value and second decoding and/or demodulating bits from the sequence bits from a subcarrier with a frequency value that is less than the center frequency value.

306. The method of aspect 305, wherein the subcarrier frequency value that is greater than the center frequency value is Fc + n×Fsc and wherein the subcarrier frequency value that is less than the center frequency is Fc - n×Fsc, wherein Fc is the value of center frequency in Hz and, Fsc is a value for subcarrier spacing in Hz, and n is an integer.

307. A method of reception in a passband OFDM transceiver comprising:

decoding and/or demodulating a sequence of bits from subcarriers in a predetermined order wherein the predetermined order comprises alternating between decoding and/or demodulating bits from subcarrier frequencies that are greater than a center frequency and decoding and/or demodulating bits from subcarrier frequencies that are less than the center frequency.

308. A method of communication in a passband OFDM system comprising:

modulating and/or encoding and/or loading, in a first transceiver, a sequence of bits onto subcarriers in an predetermined order wherein the predetermined order comprises first modulating and/or encoding and/or loading bits from the sequence bits to a subcarrier with a frequency value that is greater than a center frequency value and second modulating and/or encoding and/or loading bits from the sequence bits to a subcarrier with a frequency value that is less than the center frequency value; and

decoding and/or demodulating a sequence of bits, in a second transceiver, from subcarriers in an predetermined order wherein the predetermined order comprises first decoding and/or demodulating bits from the sequence bits from a subcarrier with a frequency value that is greater than a center frequency value and second decoding and/or demodulaling bits from the sequence bits from a subcarrier with a frequency value that is less than the center frequency value.

309. The method of aspect 308, wherein the subcarrier frequency value that is greater than the center frequency value is Fc + n×Fsc and wherein the subcarrier frequency value that is less than the center frequency is Fc - n×Fsc, wherein Fc is the value of center frequency in Hz and, Fsc is a value for subcarrier spacing in Hz, and n is an integer.

310.A method of communications in a passband OFDM system comprising:

modulating and/or encoding and/or loading, in a first transceiver, a sequence of bits onto subcarriers in a predetermined order wherein the predetermined order comprises alternating between modulating and/or encoding and/or loading bits onto sub-carrier frequencies that are greater than a center frequency and modulating and/or
encoding and/or loading bits onto subcarrier frequencies that are less than the center frequency; and
decoding and/or demodulating, in a second transceiver, a sequence of bits from subcarriers in a predetermined order wherein the predetermined order comprises alternating between decoding and/or demodulating bits from subcarrier frequencies that are greater than a center frequency and decoding and/or demodulating bits from subcarrier frequencies that are less than the center frequency.

311.A passband OFDM transceiver comprising:

means for modulating and/or encoding and/or loading a sequence of bits onto sub-carriers in an predetermined order wherein the predetermined order comprises first modulating and/or encoding and/or loading bits from the sequence bits to a subcarrier with a frequency value that is greater than a center frequency value and second modulating and/or encoding and/or loading bits from the sequence bits to a subcarrier with a frequency value that is less than the center frequency value.

312.The means of aspect 311, wherein the subcarrier frequency value that is greater than the center frequency value is Fc + n×Fsc and wherein the subcarrier frequency value that is less than the center frequency is Fc - n×Fsc, wherein Fc is the value of center frequency in Hz and, Fsc is a value for subcarrier spacing in Hz, and n is an integer.

313.A passband OFDM transceiver comprising:

means for modulating and/or encoding and/or loading a sequence of bits onto sub-carriers in a predetermined order wherein the predetermined order comprises alternating between modulating and/or encoding and/or loading bits onto subcarrier frequencies that are greater than a center frequency and modulating and/or encoding and/or loading bits onto subcarrier frequencies that are less than the center frequency.

314.A passband OFDM transceiver comprising:

means for decoding and/or demodulating a sequence of bits from subcarriers in an predetermined order wherein the predetermined order comprises first decoding and/or demodulating bits from the sequence bits from a subcarrier with a frequency value that is greater than a center frequency value and second decoding and/or demodulating bits from the sequence bits from a subcarrier with a frequency value that is less than the center frequency value.

315. The means of aspect 314, wherein the subcarrier frequency value that is greater than the center frequency value is Fc + n×Fsc and wherein the subcarrier frequency value that is less than the center frequency is Fc - n×Fsc, wherein Fc is the value of center frequency in Hz and, Fsc is a value for subcarrier spacing in Hz, and n is an integer.

316.A passband OFDM transceiver comprising:

means for decoding and/or demodulating a sequence of bits from subcarriers in a predetermined order wherein the predetermined order comprises alternating between decoding and/or demodulating bits from subcarrier frequencies that are greater than a center frequency and decoding and/or demodulating bits from sub-carrier frequencies that are less than the center frequency.

317. A passband OFDM system comprising:

means for modulating and/or encoding and/or loading, in a first transceiver, a sequence of bits onto subcarriers in an predetermined order wherein the predetermined order comprises first modulating and/or encoding and/or loading bits from the sequence bits to a subcarrier with a frequency value that is greater than a center frequency value and second modulating and/or encoding and/or loading bits from the sequence bits to a subcarrier with a frequency value that is less than the center frequency value; and

means for decoding and/or demodulating a sequence of bits, in a second transceiver, from subcarriers in an predetermined order wherein the predetermined order comprises first decoding and/or demodulating bits from the sequence bits from a subcarrier with a frequency value that is greater than a center frequency value and second decoding and/or demodulating bits from the sequence bits from a subcarrier with a frequency value that is less than the center frequency value.

318. The means of aspect 317, wherein the subcarrier frequency value that is greater than the center frequency value is Fc + n×Fsc and wherein the subcarrier frequency value that is less than the center frequency is Fc - n×Fsc, wherein Fc is the value of center frequency in Hz and, Fsc is a value for subcarrier spacing in Hz, and n is an integer.

319. A passband OFDM system comprising:

means for modulating and/or encoding and/or loading, in a first transceiver, a sequence of bits onto subcarriers in a predetermined order wherein the predetermined order comprises alternating between modulating and/or encoding and/or loading bits onto subcarrier frequencies that are greater than a center frequency and modulating and/or encoding and/or loading bits onto subcarrier frequencies that are less than the center frequency; and means for decoding and/or demodulating, in a second transceiver, a sequence of bits from subcarriers in a predetermined order wherein the predetermined order comprises alternating between decoding and/or demodulating bits from subcarrier frequencies that are greater than a center frequency and decoding and/or demodulating bits from subcarrier frequencies that are less than the center frequency.

320. A passband OFDM transceiver comprising:

a transmitter module, capable of modulating and/or encoding and/or loading a sequence of bits onto subcarriers in an predetermined order wherein the predetermined order comprises first modulating and/or encoding and/or loading bits from the sequence bits to a subcarrier with a frequency value that is greater than a center frequency value and second modulating and/or encoding and/or loading bits from the sequence bits to a subcarrier with a frequency value that is less than the center frequency value.

321. The transceiver of aspect 320, wherein the subcarrier frequency value that is greater than the center frequency value is Fc + n×Fsc and wherein the subcarrier frequency value that is less than the center frequency is Fc - n×Fsc, wherein Fc is the value of center frequency in Hz and, Fsc is a value for subcarrier spacing in Hz, and n is an integer.

322. A passband OFDM transceiver comprising:

a transmitter module capable of modulating and/or encoding and/or loading a sequence of bits onto subcarriers in a predetermined order wherein the predetermined order comprises alternating between modulating and/or encoding and/or loading bits onto subcarrier frequencies that are greater than a center frequency and modulating and/or encoding and/or loading bits onto subcarrier frequencies that are less than the center frequency.

323. A passband OFDM transceiver comprising:

a receiver module capable of decoding and/or demodulating a sequence of bits from subcarriers in an predetermined order wherein the predetermined order comprises first decoding and/or demodulating bits from the sequence bits from a sub-carrier with a frequency value that is greater than a center frequency value and second decoding and/or demodulating bits from the sequence bits from a subcarrier with a frequency value that is less than the center frequency value.

324. The transceiver of aspect 323, wherein the subcarrier frequency value that is greater than the center frequency value is Fc + n×Fsc and wherein the subcarrier frequency value that is less than the center frequency is Fc - n×Fsc, wherein Fc is the value of center frequency in Hz and, Fsc is a value for subcarrier spacing in Hz, and n is an integer.

325. A passband OFDM transceiver comprising:

a receiver module capable of decoding and/or demodulating a sequence of bits from subcarriers in a predetermined order wherein the predetermined order comprises alternating between decoding and/or demodulating bits from subcarrier frequencies that are greater than a center frequency and decoding and/or demodulating bits from subcarrier frequencies that are less than the center frequency.

326. A passband OFDM system comprising:

a transmitter module in a first transceiver capable of modulating and/or encoding and/or loading, in a first transceiver, a sequence of bits onto subcarriers in an predetermined order wherein the predetermined order comprises first modulating and/or encoding and/or loading bits from the sequence bits to a subcarrier with a frequency value that is greater than a center frequency value and second modulating and/or encoding and/or loading bits from the sequence bits to a subcarrier with a frequency value that is less than the center frequency value.

327. A receiver module in a second transceiver capable of decoding and/or demodulating a sequence of bits, in a second transceiver, from subcarriers in an predetermined order wherein the predetermined order comprises first decoding and/or demodulating bits from the sequence bits from a subcarrier with a frequency value that is greater than a center frequency value and second decoding and/or demodulating bits from the sequence bits from a subcarrier with a frequency value that is less than the center frequency value.

328. The method of aspect 327, wherein the subcarrier frequency value that is greater than the center frequency value is Fc + n×Fsc and wherein the subcarrier frequency value that is less than the center frequency is Fc - n×Fsc, wherein Fc is the value of center frequency in Hz and, Fsc is a value for subcarrier spacing in Hz, and n is an integer.

329. A passband OFDM system comprising:

a transmitter module in a second transceiver capable of modulating and/or encoding and/or loading, in a first transceiver, a sequence of bits onto subcarriers in a predetermined order wherein the predetermined order comprises alternating between modulating and/or encoding and/or loading bits onto subcarrier frequencies that are greater than a center frequency and modulating and/or encoding and/or loading bits onto subcarrier frequencies that are less than the center frequency; and

a receiver module in a second transceiver capable of decoding and/or demodulating, in a second transceiver, a sequence of bits from subcarriers in a predetermined order wherein the predetermined order comprises alternating between decoding and/or demodulating bits from subcarrier frequencies that are greater than a center frequency and decoding and/or demodulating bits from subcarrier frequencies that are less than the center frequency.

330. A computer readable storage media having stored thereon instructions that if executed perform any of the preceding method aspects.

**Claims**

1. A method to index subcarriers for profiles in passband OFDM communications comprising:

assigning, using at least a controller, a frequency $F(i_{even})$ to subcarriers with even indices in accordance with:

$$F(i_{even}) = Fc + (i/2) \times Fsc;$$

and

assigning, using at least the controller, a frequency $F(i_{ood})$ to subcarriers with odd indices in accordance with:

$$F(i_{odd}) = Fc - (i+1)/2 \times Fsc;$$

where Fc = Fuc + Fus, and
wherein $i$ is an index, Fuc is a first frequency value, Fus is a second frequency value and Fsc is third frequency value,

wherein:

a high-profile device can decode a portion of sub-carriers of a low-profile device,
a low-profile device can decode a portion of sub-carriers of a high-profile device,
sub-carrier indices in a common overlapped frequency region match for different profiles,
the high-profile device is a device operated using a profile which has a higher bandwidth relative to a low-profile device, and
the low-profile device is a device operated using a profile which has a lower bandwidth relative to a high-profile device.

2. The method of claim 1, wherein the index i can take on values between 0 and N-1, wherein N is an integer.

3. The method of claim 1 or 2, wherein the first frequency Fuc is an up-shift frequency.

4. The method of one of claims 1 to 3, wherein the second frequency Fus is an up-conversion frequency.

5. The method of one of claims 1 to 4, wherein the indexing is used for loading data on to subcarriers.

6. The method of claim 5, wherein the data is header information.

7. The method of claim 5, wherein the data is payload information.

8. The method of one of claims 1 to 7, further comprising one or more of loading or encoding one or more bits onto subcarriers in an order specified by the indices.

9. A system to index subcarriers for profiles in passband OFDM communications comprising:

a subcarrier management module and controller operable to: assign a frequency $F(i_{even})$ to subcarriers with even indices in accordance with:

$$F(i_{even}) = Fc + (i/2) \times Fsc,$$

and
assign a frequency $F(i_{odd})$ to subcarriers with odd indices in accordance with:

$$F(i_{odd}) = Fc - (i+1)/2 \times Fsc;$$

where Fc = Fuc + Fus, and
wherein $i$ is an index, Fuc is a first frequency value, Fus is a second frequency value and Fsc is third frequency value, wherein:

a high-profile device can decode a portion of sub-carriers of a low-profile device,
a low-profile device can decode a portion of sub-carriers of a high-profile device,

sub-carrier indices in a common overlapped frequency region match for different profiles,
the high-profile device is a device operated using a profile which has a higher bandwidth relative to a low-profile device, and
the low-profile device is a device operated using a profile which has a lower bandwidth relative to a high-profile device.

10. The system of claim 9, wherein the index i can take on values between 0 and N-1, wherein N is an integer.

11. The system of claim 9 or 10, wherein the first frequency Fuc is an up-shift frequency.

12. The system of one of claims 9 to 11, wherein the second frequency Fus is an up-conversion frequency.

13. The system of one of claims 9 to 12, wherein the indexing is used for loading data on to subcarriers.

14. The system of claim 13, wherein the data is header information or payload information.

15. The system of claim 13 or 14, wherein one or more bits are one or more of: loaded or encoded onto subcarriers in an order specified by the indices.

20

Node

Domain 1

30

Node

*Packet-Based OFDM Communications*

*Packet-Based OFDM Communications*

*Packet-Based OFDM Communications*

50

Node

40

Node

◄─────Packet-Based OFDM Communications─────►

60

Node

Fig. 1

Domain
Master

Domain

A

─A - B─
─C -D─

D

C

B

Fig. 2

▐║║║║║▌ - High-Profile Device

▐////▌ - Low-Profile Device

Baseband Low Profile

Passband Low Profile

50 MHz

Fc-25  Fc  Fc+25  MHz

Baseband High Profile

Passband High Profile

100 MHz

Fc-50  Fc  Fc+50  MHz

Fig. 3

Short OFDM Symbols (S = 8)    Guard Band    Long OFDM Symbols (L = 2)

| t1 | t2 | t3 | t4 | t5 | t6 | t7 | t8 | GI | T1 | T2 |

Fig. 4

| Preamble Portion with Profile Information | Header Portion | Data Portion... |

Packet

Fig. 5

600

| | |
|---|---|
| Preamble Generation Module 610 | Transmitter Module 650 |
| Profile Embedding Module 620 | Receiver Module 660 |
| Profile Decoding Module 630 | Packet Generation Module 670 |
| Controller 640 | Memory 680 |

Fig. 6

S700

BEGIN

S710

Determine Profile To
Be Used For Packet
Transmission

S720

Begin Packet
Generation

S730

Begin
Preamble
Generation

S740

Utilize One Or More Of The
Following To "Encode"
Profile To Be Used

| S750 | S752 | S754 | S756 | S758 |
|---|---|---|---|---|
| Indicate Profile Information Based On Phase Of Subcarriers In Preamble | Indicate Profile Information Based On Amplitude Of Subcarriers In Preamble | Indicate Profile Information Based On Subcarrier Spacing Of Subcarriers In Preamble | Indicate Profile Information Based On The Number Of Subcarriers In Preamble | Indicate Profile Information Based On The Indexes Of Transmitted Subcarriers In Preamble |

S760

Complete
Packet
Generation

S770

Transmit
Packet

S780

END

Fig. 7

S800

BEGIN

S810
Receive
Packet

S812
Detect Profile Used For
Transmission Based On Phase
Of Subcarriers

S814
Detect Profile Used For
Transmission Based On Amplitude
Of Subcarriers

S816
Detect Profile Used For
Transmission Of Packet Based
On Subcarrier Spacing

S818
Detect Profile Used For
Transmission Of Packet Based
On The Number Of Subcarriers

S820
Detect Profile Used For Transmission
Based On The Indexes Of
Transmitted Subcarriers

S830
Select Profile

S840
Optionally
Bypass
Header
Decoding

S850
End

Fig. 8

BEGIN – Packet
Transmission S900

S910
Select One Of Profile A And
Profile B To Be Used For
Transmission Of A Packet

S920
Profile A
Selected? ————————————————————————————Profile B Selected

Yes

S930
Utilize One Or More Of The
Following To Indicate Profile
In The Preamble

S932
A First Value
For One Or
More Phases
Of The
Subcarriers In
The Preamble

S934
A First Value
For One Or
More
Amplitudes Of
Subcarriers In
The Preamble

S936
A First Value
For The
Subcarrier
Spacing Of
Subcarriers In
The Preamble

S938
A First Value
For The
Number Of
Subcarriers In
The Preamble

S939
A First Set Of
Indexes Of
Transmitted
Subcarriers In
The Preamble

S940
Utilize One Or More Of The
Following To Indicate The
Profile In The Preamble

S942
A Second
Value For One
Or More
Phases Of The
Subcarriers In
The Preamble

S944
A Second
Value For One
Or More
Amplitudes Of
Subcarriers In
The Preamble

S946
A Second
Value For The
Subcarrier
Spacing Of
Subcarriers In
The Preamble

S948
A Second
Value For The
Number Of
Subcarriers In
The Preamble

S949
A Second Set
Of Indexes Of
Transmitted
Subcarriers In
The Preamble

S950
Complete
Packet
Generation

S960
Transmit
Packet

S970
END

Fig. 9

BEGIN – Packet
Reception — S1000

S1010
Receive A Packet Transmitted
With Either Profile A Or Profile
B

S1020
Detect One Or More Of The
Following:

| S1022 | S1024 | S1026 | S1028 | S1029 |
|---|---|---|---|---|
| A First Or Second Value For One Or More Phases Of The Subcarriers In The Preamble | A First Or Second Value For One Or More Amplitudes Of Subcarriers In The Preamble | A First Or Second Value For The Subcarrier Spacing Of Subcarriers In The Preamble | A First Or Second Value For The Number Of Subcarriers In The Preamble | A First Or Second Set Of Indexes Of Transmitted Subcarriers In The Preamble |

Determine The Profile Used
For Transmission Based On   S1030
The Detection, Where The
First Values Correspond To
Profile A And The Second
Values Correspond To Profile
B

S1040
END

Fig. 10

72

Baseband Low Profile

128  255  0  127
*Fus*  *50*  MHz

Passband Low Profile

128  255  0  127
*Fc-25*  *Fc*  *Fc+25*  MHz

Baseband High Profile

256  511  0  255
*Fus*  *100*  MHz

Passband High Profile

256  511  0  255
*Fc-50*  *Fc*  *Fc+50*  MHz

Fig. 11

Baseband Low Profile

0  255
*Fus*  *50*  MHz

Passband Low Profile

128  255  0  127
*Fc-25*  *Fc*  *Fc+25*  MHz

Baseband High Profile

0  255  256  511
*Fus*  *100*  MHz

Passband High Profile

384  511  128  255  0  127  256  383
*Fc-50*  *Fc*  *Fc+50*  MHz

Fig. 12

Passband Low Profile

Fc-25     Fc     Fc+25     MHz

Passband High Profile

Fc-50          Fc          Fc+50     MHz

Fig. 13

1200

Subcarrier Management Module    1210

Header Decoding Module    1220

Controller    1230

Transmitter Module    1250

Receiver Module    1260

Memory    1240

Fig. 14

S1500

BEGIN

Assign a Frequency to Subcarriers S1510
With Even Indices in accordance
with

$$F(i_{even}) = Fc + (i/2) \times Fsc$$

Assign a Frequency to Subcarriers S1520
With Odd Indices in accordance
with

$$F(i_{odd}) = Fc - (i+1)/2 \times Fsc$$

Load A Bit Stream Onto S1530
Subcarriers In The Order
Determined By The
Indices

S1540

END

Fig. 15

S1600

Begin

Assign a Frequency to Subcarriers S1610
With Even Indices in accordance
with

$$F(i_{even}) = Fc + (i/2) \times Fsc$$

Assign a Frequency to Subcarriers S1620
With Odd Indices in accordance
with

$$F(i_{odd}) = Fc - (i+1)/2 \times Fsc$$

Demodulate Bit Stream S1630
In The Order Determined
By The Indices

S1640

END

Fig. 16

75

S1700

BEGIN

S1710

Modulate And/or Encode
And/or Load A Plurality Of
Bits Onto Subcarriers Using
An Order Specified By A
Predetermined Indexing
Technique

The Predetermined Indexing
Technique Specifies that:

Subcarriers With Odd Indices are
assigned a frequency in
accordance with:

$$F(i_{odd}) = Fc - (i+1)/2 \times Fsc$$

And

Subcarriers With Even Indices are
assigned a frequency in
accordance with:

$$F(i_{even}) = Fc + (i/2) \times Fsc$$

S1720

END

Fig. 17

S1800

Begin

S1810

Demodulate And/or
Decode A Plurality Of
Bits In An Order
Specified By A
Predetermined Indexing
Technique

The Predetermined Indexing
Technique Specifies that:

Subcarriers With Odd Indices were
assigned a frequency in
accordance with:

$$F(i_{odd}) = Fc - (i+1)/2 \times Fsc$$

And

Subcarriers With Even Indices
were assigned a frequency in
accordance with:

$$F(i_{even}) = Fc + (i/2) \times Fsc$$

S1820

END

Fig. 18

## Baseband Low Profile

A single copy of header block

Multiplied header blocks
over the entire bandwidth

## Passband Low Profile

## Baseband High Profile

Multiplied header blocks
for high profile only

## Passband High Profile

Fig. 19

**Baseband Sub-carrier Indexing**

8 x Fsc   Fsc   preamble tone

non-preamble tone

. . .

| Preamble Index | 0 | 1 | 2 | 3 | 4 | 5 | 6 | 7 | 8 | 9 | 10 | 11 | 12 | 13 | · · · | 163 | 164 | 165 | 166 | 167 | 168 | 169 | 170 | 171 | 172 | 173 | 174 | 175 | 176 | 177 | 178 | 179 | 180 | 181 | · · · |

| Header Index | 0 | 1 | 2 | 3 | 4 | 5 | 6 | 7 | 8 | 8 | 10 | 11 | 12 | 13 | · · · | 163 | 164 | 165 | 166 | 167 | 0 | 1 | 2 | 3 | 4 | 5 | 6 | 7 | 8 | 8 | 10 | 11 | 12 | 13 | · · · |

| FEC bits | 0 1 | 2 3 | 4 5 | 6 7 | 8 9 | 10 11 | 12 13 | 14 15 | 16 17 | 18 19 | 20 21 | 22 23 | 24 25 | 26 27 | | 226 227 | 228 229 | 230 231 | 232 233 | 334 335 | 0 1 | 2 3 | 4 5 | 6 7 | 8 9 | 10 11 | 12 13 | 14 15 | 16 17 | 18 19 | 20 21 | 22 23 | 24 25 | 26 27 | |

first copy of the header block    second copy of the header block

**Passband Sub-carrier Indexing**

Fc

| Preamble Index | · · · | 185 | 183 | 181 | 179 | 177 | 175 | 173 | 171 | 169 | 167 | 165 | · · · | 7 | 5 | 3 | 1 | 0 | 2 | 4 | 6 | 8 | · · · | 166 | 168 | 170 | 172 | 174 | 176 | 178 | 180 | 182 | 184 | 186 | · · · |

| Header Index | · · · | 17 | 15 | 13 | 11 | 9 | 7 | 5 | 3 | 1 | 167 | 165 | · · · | 7 | 5 | 3 | 1 | 0 | 2 | 4 | 6 | 8 | · · · | 166 | 0 | 2 | 4 | 6 | 8 | 10 | 12 | 14 | 16 | 18 | · · · |

| FEC bits | · · · | 34 35 | 30 31 | 26 27 | 22 23 | 18 19 | 14 15 | 10 11 | 6 7 | 2 3 | 334 335 | 330 229 | · · · | 14 15 | 10 11 | 6 7 | 2 3 | 0 1 | 4 5 | i8 9 | 12 13 | 16 17 | · · · | 332 333 | 0 1 | 4 5 | 8 9 | 12 13 | 16 17 | 20 21 | 24 25 | 28 29 | 32 33 | 36 37 | |

second copy of the header block    first copy of the header block    second copy of the header block

EP 2 720 399 A1

Fig. 20

**Baseband Sub-carrier Indexing**

8 x Fsc    Fsc    preamble tone

non-preamble tone

· · ·

| Preamble Index | 0 | 1 | 2 | 3 | 4 | 5 | 6 | 7 | 8 | 9 | 10 | 11 | 12 | 13 | · · · | 163 | 164 | 165 | 166 | 167 | 168 | 169 | 170 | 171 | 172 | 173 | 174 | 175 | 176 | 177 | 178 | 179 | 180 | 181 | · · · |
| Header Index | 0 | 1 | 2 | 3 | 4 | 5 | 6 | 7 | 8 | 8 | 10 | 11 | 12 | 13 | · · · | 163 | 164 | 165 | 166 | 0 | 1 | 2 | 3 | 4 | 5 | 6 | 7 | 8 | 9 | 10 | 11 | 12 | 13 | 14 | · · · |

first copy of the header block     second copy of the header block

**Passband Sub-carrier Indexing**

Fc

| Preamble Index | · · · | 185 | 183 | 181 | 179 | 177 | 175 | 173 | 171 | 169 | 167 | 165 | · · · | 7 | 5 | 3 | 1 | 0 | 2 | 4 | 6 | 8 | · · · | 166 | 168 | 170 | 172 | 174 | 176 | 178 | 180 | 182 | 184 | 186 | · · · |
| Header Index | · · · | 18 | 16 | 14 | 12 | 10 | 8 | 6 | 4 | 2 | 0 | 165 | · · · | 7 | 5 | 3 | 1 | 0 | 2 | 4 | 6 | 8 | · · · | 166 | 1 | 3 | 5 | 7 | 9 | 11 | 13 | 15 | 17 | 19 | · · · |

second copy of the header block     first copy of the header block     second copy of the header block

Fig. 21

Baseband Sub-carrier Indexing

Passband Sub-carrier Indexing

Fig. 22

EP 2 720 399 A1

2300

2310

| FEC Encoder/ Decoder Module |
|---|

2320

| Header Encoder |
|---|

2330

| Header Decoder |
|---|

2340

| Controller |
|---|

2350

| Memory |
|---|

2360

| Transmitter Module |
|---|

2370

| Receiver Module |
|---|

2380

| Modulator/ Encoder/ Demodulator/ Decoder Module |
|---|

Fig. 23

BEGIN — S2400

Encode A Plurality Of Bits Using A Forward Error Correction Code — S2410

Generate An FEC Codeword Comprising A Plurality Of Encoded Bits — S2420

Concatenating A First Copy Of The FEC Codeword With A Second Copy Of The FEC Codeword, Wherein The Concatenating Comprises Cyclically Shifting By Two Bits The Second Concatenated Copy Of The FEC Codeword Relative To The First Concatenated Copy Of The FEC Codeword — S2430

Modulating The Encoded Bits Of The First And Second Copies Of The FEC Codewords On At Least One OFDM Symbol — S2440

END — S2450

Fig. 24

S2500 — BEGIN

S2510 — Receiving A Plurality Of Bits Comprising At Least Two Concatenated Copies Of An FEC Codeword

S2520 — A First Copy Of The FEC Codeword Is Decoded To Generate A First Plurality Of Decoded Bits

S2530 — A Second Copy Of The FEC Codeword Is Decoded To Generate A Second Plurality Of Decoded Bits, Wherein The Decoding Comprises Cyclically Shifting By Two Bits The Second Copy Of The FEC Codeword Relative To The First Copy Of The FEC Codeword

S2540 — END

Fig. 25

Fig. 26

Fig. 27

S2800

BEGIN
S2810

Modulate / Encode /Load
A Sequence Of Bits Onto
Subcarriers In A
Predetermined Order

Transmit
Sequence Of
Bits From
Transceiver
S2820

Receive
Sequence Of
Bits At Second
Transceiver
S2830

S2840

Decode And/or Demodulate
The Sequence Of Bits From
Subcarriers In The
Predetermined Order

S2850

END

Predetermined Order Comprises:
1st - Modulating And/or Encoding And/or Loading
Bits From The Sequence Of Bits To A Subcarrier
With A Frequency Value That Is Greater Than A
Center Frequency Value And
2nd - Modulating And/or Encoding And/or Loading
Bits From The Sequence Of Bits To A Subcarrier
With A Frequency Value That Is Less Than The
Center Frequency Value
And/or
The Predetermined Order Comprises:
Alternating Between Modulating And/or Encoding
And/or Loading Bits Onto Subcarrier Frequencies
That Are Greater Than A Center Frequency And
Modulating And/or Encoding And/or Loading Bits
Onto Subcarrier Frequencies That Are Less Than
The Center Frequency.

Predetermined Order Comprises:
1st - Modulating And/or Encoding And/or Loading
Bits From The Sequence Of Bits To A Subcarrier
With A Frequency Value That Is Greater Than A
Center Frequency Value And
2nd - Modulating And/or Encoding And/or Loading
Bits From The Sequence Of Bits To A Subcarrier
With A Frequency Value That Is Less Than The
Center Frequency Value
And/or
The Predetermined Order Comprises:
Alternating Between Modulating And/or Encoding
And/or Loading Bits Onto Subcarrier Frequencies
That Are Greater Than A Center Frequency And
Modulating And/or Encoding And/or Loading Bits
Onto Subcarrier Frequencies That Are Less Than
The Center Frequency.

Fig. 28

**EUROPEAN SEARCH REPORT**

Application Number

EP 14 00 0108

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/039186 A1 (QUALCOMM INC [US]; CASACCIA LORENZO [US]; GRILLI FRANCESCO [US]) 28 April 2005 (2005-04-28) <br> * paragraphs [0013], [0014], [0016], [0029], [0034], [0039], [0044] * <br> * figures 2, 3 * | 1-15 | INV. <br> H04L5/00 <br> H04L27/26 <br> H04L1/04 <br> H04L1/08 <br> H04L1/00 |
| A | US 2005/233752 A1 (LAROIA RAJIV [US] ET AL) 20 October 2005 (2005-10-20) <br> * paragraphs [0062], [0114], [0128]; figure 17 * | 1-15 | |
| A | CN 101 136 894 A (ZTE CORP [CN]) 5 March 2008 (2008-03-05) <br> * figure 5 * <br> -& WO 2008/118429 A1 (ZTE USA INC [US]; CAI SEAN [US]) 2 October 2008 (2008-10-02) <br> * paragraphs [0007], [0010], [0035], [0047]; figure 3c * | 1-15 | |

TECHNICAL FIELDS SEARCHED (IPC)

H04L

The present search report has been drawn up for all claims

| Place of search | Date of completion of the search | Examiner |
|---|---|---|
| The Hague | 26 February 2014 | Barrientos Lezcano |

EPO FORM 1503 03.82 (P04C01)

## ANNEX TO THE EUROPEAN SEARCH REPORT
## ON EUROPEAN PATENT APPLICATION NO.                    EP 14 00 0108

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2014

| Patent document cited in search report | | Publication date | Patent family member(s) | | Publication date |
|---|---|---|---|---|---|
| WO 2005039186 | A1 | 28-04-2005 | BR | PI0415415 A | 05-12-2006 |
| | | | CA | 2542651 A1 | 28-04-2005 |
| | | | CN | 1894973 A | 10-01-2007 |
| | | | CN | 101902638 A | 01-12-2010 |
| | | | EP | 1678955 A1 | 12-07-2006 |
| | | | EP | 2378772 A1 | 19-10-2011 |
| | | | JP | 2007508783 A | 05-04-2007 |
| | | | JP | 2011010292 A | 13-01-2011 |
| | | | JP | 2013219790 A | 24-10-2013 |
| | | | KR | 20060096080 A | 05-09-2006 |
| | | | TW | I388197 B | 01-03-2013 |
| | | | TW | 201313003 A | 16-03-2013 |
| | | | US | 2005129018 A1 | 16-06-2005 |
| | | | WO | 2005039186 A1 | 28-04-2005 |
| US 2005233752 | A1 | 20-10-2005 | AU | 2004319505 A1 | 17-11-2005 |
| | | | BR | PI0418738 A | 11-09-2007 |
| | | | CA | 2562705 A1 | 17-11-2005 |
| | | | CN | 101496436 A | 29-07-2009 |
| | | | EG | 24494 A | 16-08-2009 |
| | | | EP | 1736011 A2 | 27-12-2006 |
| | | | JP | 4550886 B2 | 22-09-2010 |
| | | | JP | 2007537625 A | 20-12-2007 |
| | | | KR | 20060135073 A | 28-12-2006 |
| | | | US | 2005233752 A1 | 20-10-2005 |
| | | | US | 2005250502 A1 | 10-11-2005 |
| | | | WO | 2005109916 A2 | 17-11-2005 |
| | | | ZA | 200608581 A | 27-08-2008 |
| CN 101136894 | A | 05-03-2008 | CA | 2681736 A1 | 02-10-2008 |
| | | | CN | 101136894 A | 05-03-2008 |
| | | | CN | 101730981 A | 09-06-2010 |
| | | | EP | 2140592 A1 | 06-01-2010 |
| | | | JP | 2010522500 A | 01-07-2010 |
| | | | KR | 20100015835 A | 12-02-2010 |
| | | | US | 2008240275 A1 | 02-10-2008 |
| | | | WO | 2008118429 A1 | 02-10-2008 |
| WO 2008118429 | A1 | 02-10-2008 | CA | 2681736 A1 | 02-10-2008 |
| | | | CN | 101136894 A | 05-03-2008 |
| | | | CN | 101730981 A | 09-06-2010 |
| | | | EP | 2140592 A1 | 06-01-2010 |
| | | | JP | 2010522500 A | 01-07-2010 |
| | | | KR | 20100015835 A | 12-02-2010 |
| | | | US | 2008240275 A1 | 02-10-2008 |
| | | | WO | 2008118429 A1 | 02-10-2008 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 14 00 0108

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2014

| Patent document cited in search report | Publication date | Patent family member(s) | Publication date |
|---|---|---|---|
| | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61091621 A

- US 61196068 B